# EUROPEAN PATENT APPLICATION

(11) **EP 4 654 007 A1**
(43) Date of publication of application: **26.11.2025**
(21) Application number: 23916790.1
(22) Date of filing: 19.01.2023
(51) Int. Cl.: G06F 9/00

(54) **CONTROL METHOD AND APPARATUS, AND DELIVERY VEHICLE**

(71) Applicant: Shenzhen Yinwang Intelligent Technologies Co., Ltd., Shenzhen, Guangdong 518110 (CN)
(72) Inventor: WANG, Qianqian, Shenzhen, Guangdong 518129 (CN); LI, Ping, Shenzhen, Guangdong 518129 (CN); QU, Guancun, Shenzhen, Guangdong 518129 (CN)
(74) Representative: Maiwald GmbH
(86) International application number: PCT/CN2023/073186
(87) International publication number: WO 2024/152310

(57) **Abstract**

A control method and apparatus, and a means of delivery are provided. The method includes: determining a display frame rate of a display device based on at least one of an operating state of the means of delivery, a location of a user in a cabin of the means of delivery, a touchscreen operation on the display device of the means of delivery, and a type of an application to which an interface to be displayed by the display device belongs; and controlling the display device to perform displaying at the display frame rate. The control method in this application may be applied to an intelligent vehicle, to improve driving experience of the user, and further improve driving safety.

## Description

### TECHNICAL FIELD

This application relates to the field of intelligent cabins, and in particular, to a control method and apparatus, and a means of delivery.

### BACKGROUND

As intelligence and network connection of vehicles develop, vehicle cabins gradually develop toward intelligent cabins with man-machine interaction as a core and multi-screen interaction. The intelligent cabin can provide more audio and video entertainment functions. However, cases such as screen freezing may exist, resulting in poor user experience. Therefore, in a process of using a vehicle-mounted display, how to improve user experience becomes an urgent problem to be resolved.

### SUMMARY

This application provides a control method and apparatus, and a means of delivery, to control a display frame rate of a display device of the means of delivery based on an operating state of the means of delivery and/or a location of a user in the means of delivery, so that driving experience of the user can be improved, and driving safety can be further improved.

According to a first aspect, a control method is provided. The method may be performed by a means of delivery, or may be performed by a computing platform of a means of delivery, or may be performed by a chip or a circuit module of a means of delivery. This is not specifically limited in this application.

The means of delivery in this application may include a road transportation means, a water transportation means, an air transportation means, an industrial device, an agricultural device, an entertainment device, or the like. For example, the means of delivery may be a vehicle. The vehicle is a vehicle in a broad sense, and may be transportation (such as a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the means of delivery may be transportation such as an aircraft or a ship.

The method includes: determining a display frame rate of a display device based on at least one of an operating state of the means of delivery, a location of a user in a cabin of the means of delivery, a touchscreen operation on the display device of the means of delivery, and a type of an application to which an interface to be displayed by the display device belongs; and controlling the display device to perform displaying at the display frame rate.

Compared with that in the conventional technology, in the foregoing solution, a new reference factor used to determine a display frame rate is proposed, so that the display frame rate can be flexibly determined when resources are limited, a display effect meets a user requirement to a greater extent, and user experience is improved. For example, when there are a plurality of display devices, and computing power of a chip that controls the display device is insufficient to support all the display devices in displaying at a full frame rate, display frame rates of one or more display devices is decreased, to ensure that a remaining display device displays at a high display frame rate. In this way, smoothness of the remaining display device is improved.

For example, the display device may include but is not limited to a head-up display, a central display, a front passenger entertainment screen, a rear screen of a driver's headrest, and a rear screen of a front passenger's headrest.

The display frame rate in this application is a frequency (or a rate) at which bitmap images in a unit of frame continuously appear on a display device. Alternatively, the display frame rate may be understood as a quantity of frames of display data submitted to the display device by a display composition system (surface flinger) within a unit of time. It may be understood that a higher display frame rate indicates higher image smoothness.

With reference to the first aspect, in some implementations of the first aspect, the determining the display frame rate of the display device based on at least one of an operating state of the means of delivery, a location of a user in a cabin of the means of delivery, a touchscreen operation on the display device of the means of delivery, and a type of an application to which an interface to be displayed by the display device belongs includes: adjusting the display frame rate based on a change of at least one of the operating state, the location of the user in the cabin of the means of delivery, the touchscreen operation on the display device of the means of delivery, and the type of the application to which the interface to be displayed by the display device belongs.

In the foregoing technical solution, the display frame rate of the display device is dynamically adjusted based on at least one of the operating state of the means of delivery, the location of the user in the cabin, the touchscreen operation, and the type of the application. For example, this helps improve driving safety while ensuring user experience in a traveling process of the means of delivery, and helps improve entertainment experience of the user when the means of delivery stops.

With reference to the first aspect, in some implementations of the first aspect, the change of the operating state includes a transition between a traveling state and a parking state, or a change of an autonomous driving level.

With reference to the first aspect, in some implementations of the first aspect, the display device is configured to perform displaying at least one of operating condition information and navigation information of the means of delivery, and the adjusting the display frame rate based on the change of the at least one of the operating state, the location of the user in the cabin of the means of delivery, the touchscreen operation on the display device of the means of delivery, and the type of the application to which the interface to be displayed by the display device belongs includes: increasing the display frame rate in response to the change of the operating state from the parking state to the traveling state; decreasing the display frame rate in response to the change of the operating state from the traveling state to the parking state; increasing the display frame rate in response to a decrease in the autonomous driving level of the means of delivery; or decreasing the display frame rate in response to an increase in the autonomous driving level of the means of delivery.

For example, the operating condition information may include but is not limited to a traveling speed, a rotational speed, a gear, a remaining electricity quantity or a remaining fuel quantity, an available remaining mileage, and indicator or alarm light information. An indicator light or an alarm light may include at least one of the following: an antifreeze liquid level indicator, a fuel volume indicator, a cleaner liquid level indicator, a charging indicator, a near-far light indicator, a gearbox gear indicator, an anti-lock brake system indicator, a driving force adjustment indicator, and an airbag alarm indicator.

For example, the navigation information may include at least one of the following: a destination of the means of delivery in a current trip, a traveling path of the means of delivery from a current location to the destination, and a remaining distance of the means of delivery from the current location to the destination. In some possible implementations, the navigation information is displayed by using a navigation-type application.

For example, the display device may include an instrument screen, or may include a head-up display, or may include a central display.

In the foregoing technical solution, when the means of delivery is in the traveling state, the display device that displays the navigation information and the operating condition information is controlled to perform displaying at a high display frame rate, to ensure that driving safety-related information is refreshed in real time at a high speed. This helps improve driving safety. When the autonomous driving level is high, a driver may be less dependent on the navigation information and the operating condition information. Therefore, the display device that displays the navigation information and the operating condition information may be controlled to perform displaying at a low display frame rate.

With reference to the first aspect, in some implementations of the first aspect, the display device is configured to display entertainment information, and the adjusting the display frame rate based on the change of the at least one of the operating state, the location of the user in the cabin of the means of delivery, the touchscreen operation on the display device of the means of delivery, and the type of the application to which the interface to be displayed by the display device belongs includes: decreasing the display frame rate in response to the change of the operating state from the parking state to the traveling state; increasing the display frame rate in response to the change of the operating state from the traveling state to the parking state; decreasing the display frame rate in response to a decrease in the autonomous driving level of the means of delivery; or increasing the display frame rate in response to an increase in the autonomous driving level of the means of delivery.

For example, the entertainment information may include but is not limited to a video, a game, news consultation, and music. In some possible implementations, the entertainment information is displayed by using an entertainment-related application, for example, displayed by using a video-type application, a music-type application, or a game-type application.

For example, the display device may include a central display, or may include a front passenger entertainment screen, or may include a rear screen of a driver's (or front passenger's) headrest.

In the foregoing technical solution, when the means of delivery is in the parking state, the display device that displays the entertainment information is controlled to perform displaying at a high display frame rate, to ensure that entertainment-related information is refreshed in real time at a high speed. This helps improve entertainment experience of the user. When the autonomous driving level is high, the display device that displays the entertainment information may be controlled to perform displaying at a high display frame rate, to provide entertainment experience of the user.

With reference to the first aspect, in some implementations of the first aspect, the adjusting the display frame rate based on the change of the at least one of the operating state, the location of the user in the cabin of the means of delivery, the touchscreen operation on the display device of the means of delivery, and the type of the application to which the interface to be displayed by the display device belongs includes: increasing the display frame rate in response to the user arriving at a location that is in the cabin and that corresponds to the display device; or decreasing the display frame rate in response to the user leaving a location that is in the cabin and that corresponds to the display device.

For example, a location that is in the cabin and that corresponds to the display device may include: Content displayed by the display device is mainly viewed by the user at the location.

For example, when the display device is a central display or an instrument screen, the location that is in the cabin and that corresponds to the display device may be a location of the driver. When the display device is a rear screen of a driver's headrest, the location that is in the cabin and that corresponds to the display device may be a left side location in a second row.

In the foregoing technical solution, when a user is detected, a display frame rate of a display device at a location corresponding to the user is increased. This helps improve interaction experience and screen use experience of the user. When the user leaves, the display frame rate of the display device at the location corresponding to the user is decreased. This helps reduce power consumption.

With reference to the first aspect, in some implementations of the first aspect, the adjusting the display frame rate based on the change of the at least one of the operating state, the location of the user in the cabin of the means of delivery, the touchscreen operation on the display device of the means of delivery, and the type of the application to which the interface to be displayed by the display device belongs includes: decreasing the display frame rate in response to no touchscreen operation occurring within predetermined time after the touchscreen operation; or increasing the display frame rate in response to the touchscreen operation, where no touchscreen operation occurs within predetermined time before the touchscreen operation.

For example, the predetermined time may be 3 seconds, or may be 5 seconds, or may be other duration.

In some possible implementations, when the display frame rate of the display device is controlled to be increased, a display frame rate of another display device on which no touchscreen signal is detected is decreased.

In the foregoing technical solution, a display frame rate of a touched display device is improved based on a screen touching behavior of the user, and a touch delay of the display device is decreased. This helps improve interaction experience when the user uses the display device.

With reference to the first aspect, in some implementations of the first aspect, the display device includes a first display device and a second display device. The first display device corresponds to a first area in the cabin, and the second display device corresponds to a second area in the cabin. The determining the display frame rate of the display device includes: determining that a display frame rate of the first display device is different from a display frame rate of the second display device.

With reference to the first aspect, in some implementations of the first aspect, the determining that the display frame rate of the first display device is different from the display frame rate of the second display device includes: in response to there being no user in the first area and there being a user in the second area, determining that the display frame rate of the first display device is lower than the display frame rate of the second display device; in response to there being a user in the first area and there being no user in the second area, determining that the display frame rate of the first display device is higher than the display frame rate of the second display device; or in response to there being a user in the first area and a user in the second area, determining that the display frame rate of the first display device is higher than the display frame rate of the second display device, where the first area is a driver area of the cabin, and the second area includes one or more areas other than the driver area.

That the first display device corresponds to a first area in the cabin includes: The first display device is disposed in the first area; or the first display device is configured to display for a user in the first area. That the second display device corresponds to a second area in the cabin includes: The second display device is disposed in the second area; or the second display device is configured to display for a user in the second area.

For example, if the first area is a driver area, the first display device may include an instrument screen, or may include a head-up display, or may include a central display. If the first area is a front passenger area, the first display device includes a front passenger entertainment screen. Alternatively, if the first area is a rear-row area, the first display device includes a rear screen of a driver's headrest and/or a rear screen of a front passenger's headrest.

In the foregoing technical solution, it is preferentially ensured that the display device corresponding to an area with a user in the cabin displays at a high frame rate, to help improve user experience. Further, when there is a user in a plurality of areas including the driver area, it is preferentially ensured that the display device in the driver area displays at a high frame rate. This helps improve driving experience and driving safety of a driver user.

With reference to the first aspect, in some implementations of the first aspect, the determining that the display frame rate of the first display device is different from the display frame rate of the second display device includes: in response to a user touchscreen operation on the first display device within preset time and no user touchscreen operation on the second display device within the preset time, determining that the display frame rate of the first display device is higher than the display frame rate of the second display device; or in response to no user touchscreen operation on the first display device within preset time and a user touchscreen operation on the second display device within the preset time, determining that the display frame rate of the first display device is lower than the display frame rate of the second display device.

For example, the preset time may be 3 seconds, 5 seconds, or other duration.

In some possible implementations, full frame rates of the first display device and the second display device are both 60 frames per second (frames per second, fps). When the first display device displays at 60 fps, and the second display device displays at 30 fps, and the touchscreen operation on the second display device is detected and the touchscreen operation on the first display device is not detected, the display frame rate of the first display device may be controlled to be decreased to 30 fps or 45 fps, and the display frame rate of the second display device may be controlled to be increased to 60 fps.

In the foregoing technical solution, when there are a plurality of display devices in the cabin for display, a display frame rate of a touched display device is increased based on a touchscreen operation on the display device, so that the touched display device displays at a high frame rate. This decreases a touch delay of the display device. A display frame rate of an untouched display device is decreased, so that energy consumption of the display device during display can be decreased, and intelligence of the display device and the means of delivery can be improved.

With reference to the first aspect, in some implementations of the first aspect, the determining that the display frame rate of the first display device is different from the display frame rate of the second display device includes: in response to a priority of a first application to which an interface to be displayed by the first display device belongs being higher than a priority of a second application to which an interface to be displayed by the second display device belongs, determining that the display frame rate of the first display device is higher than the display frame rate of the second display device; or in response to a priority of a first application to which an interface to be displayed by the first display device belongs being lower than a priority of a second application to which an interface to be displayed by the second display device belongs, determining that the display frame rate of the first display device is lower than the display frame rate of the second display device.

In the foregoing technical solution, a display frame rate at which the display device displays is controlled based on a priority of an application to which a to-be-displayed interface belongs. This helps further improve intelligence of the display device. For example, when the means of delivery is in the traveling state, a priority of a navigation application may be set to be high, and a priority of an entertainment application may be set to be low, so that it can be ensured that a display device that displays the navigation application displays at a high frame rate, and that a display device that displays the entertainment application is controlled to perform displaying at a low frame rate, to improve driving safety. When the means of delivery is in the parking state, the priority of the navigation application may be set to be low, and the priority of the navigation application may be set to be high, so that it can be ensured that the display device that displays the navigation application displays at a low frame rate, and that the display device that displays the entertainment application is controlled to perform displaying at a high frame rate, to improve entertainment experience of the user.

With reference to the first aspect, in some implementations of the first aspect, the determining the display frame rate of the display device includes: determining the display frame rate based on resource occupation information, where the resource occupation information indicates a used resource capacity and/or an available resource capacity in a remaining resource of a computing unit, and the computing unit is associated with the display device.

For example, that the computing unit is associated with the display device may include: The computing unit performs data processing to implement a display function of the display device. For example, the computing unit may include a central processing unit (central processing unit, CPU), a graphics processing unit (graphics processing unit, GPU), and the like.

In some possible implementations, if a display device corresponding to an area without a user in the cabin is in an off state, a display frame rate of a display device that is in an area with a user and that is indicated by a first state is controlled to decreased when the resource occupation information indicates that the used resource capacity of the computing unit is greater than or equal to a preset capacity threshold. For example, if there is a user in the driver area and the front passenger area, when the resource occupation information indicates that the used resource capacity of the computing unit is greater than or equal to the preset capacity threshold, a display frame rate of a display device (for example, a central display, an instrument screen, or a head-up display) corresponding to the driver area and a display frame rate of a display device (for example, a front passenger entertainment screen) corresponding to the front passenger area are controlled to be decreased.

Further, when the used capacity of computing resources is less than the preset capacity threshold, the display frame rate of the display device is controlled to be increased.

For example, the preset capacity threshold may be 75%, 70%, or another value.

In the foregoing technical solution, the frame rate of the display device is adjusted based on the used resource capacity of the computing unit. This helps appropriately use computing power of the chip. When the used resource capacity of the computing unit is excessively high, a display frame rate of an opened display device is controlled to be decreased. This helps prevent frame freezing of the display device caused by the excessively high used resource capacity of the computing unit. When the used resource capacity of the computing unit is small, the display device is controlled to perform displaying at a high display frame rate, to improve image smoothness, and improve user experience.

With reference to the first aspect, in some implementations of the first aspect, the display device includes a third display device, the third display device is configured to perform displaying at least one of entertainment information and navigation information, and the determining the display frame rate includes: when the means of delivery is in the traveling state and the resource occupation information indicates that the used resource capacity is greater than or equal to a preset capacity threshold, determining that the display frame rate is a first frame rate; and when the means of delivery is in the traveling state and the resource occupation information indicates that the used resource capacity is less than the preset capacity threshold, determining that the display frame rate is a second frame rate, where the first frame rate is higher than the second frame rate.

For example, the third display device may be a display device other than a display device configured to display the operating condition information. For example, the third display device may include at least one of the following: a central display, a front passenger entertainment screen, a rear screen of a driver's headrest, and a rear screen of a front passenger's headrest. In some possible implementations, the third display device may further include a head-up display.

In some possible implementations, if space of a traveling area of the means of delivery is narrow, or the means of delivery is in a reversing process, the third display device may be a display device other than a display device configured to display a 360-degree surround view image and/or a reversing image. For example, the third display device may include at least one of the following: a head-up display, an instrument screen, a front passenger entertainment screen, a rear screen of a driver's headrest, and a rear screen of a front passenger's headrest.

In some possible implementations, the third display device may be a display device selected by the user. For example, the user may set to control to decrease a display frame rate of a display device like a front passenger entertainment screen or a rear-row screen when the resource occupation information indicates that the used resource capacity of the computing unit is greater than or equal to the preset capacity threshold.

In the foregoing technical solution, when the means of delivery is in the traveling state, the used resource capacity of the computing unit is greater than or equal to the preset capacity threshold, and the display frame rate of the display device other than the display device that displays the operating condition information of the means of delivery is controlled to be decreased. When resources of the computing unit are limited, a display frame rate of a display device like an instrument screen or a central display is ensured, to help improve driving safety and user experience.

With reference to the first aspect, in some implementations of the first aspect, the third display device includes one or more display devices other than an instrument screen.

With reference to the first aspect, in some implementations of the first aspect, the determining the display frame rate of the display device includes: when the means of delivery is in the traveling state, and single-frame processing duration in first preset duration is greater than or equal to preset processing duration, determining to decrease the display frame rate of the display device.

For example, the first preset duration may be 1 second, or may be 1.5 seconds, or may be other duration. The preset processing duration may be 16.7 milliseconds, or may be other preset processing duration. For example, when the single-frame processing duration is greater than or equal to 16.7 milliseconds one consecutive second, it indicates that a processing capability of a computing platform is insufficient to support the display device in displaying at 60 fps. In this case, display frame rates of some or all display devices are controlled to be decreased.

In the foregoing technical solution, when the processing capability of the computing platform is insufficient, the display frame rate of the display device is controlled to be decreased, to reduce a probability that frame freezing or frame loss occurs on the display device, and improve user experience.

According to a second aspect, a control method is provided. The method includes: determining that a means of delivery is in a first preset scenario, where the first preset scenario is associated with at least one of an operating state of the means of delivery and a location of a user in a cabin of the means of delivery, and the operating state includes a traveling state or a parking state; and controlling a display frame rate of a display device of the means of delivery based on the first preset scenario.

In the foregoing technical solution, the display frame rate of the display device is adjusted based on the preset scenario, so that a picture of the display device can be smoothly displayed. This improves user experience.

In some possible implementations, the controlling a display frame rate of a display device of the means of delivery based on the first preset scenario includes: when it is determined that the means of delivery is switched from a second preset scenario to the first preset scenario, controlling the display frame rate to be switched from a second frame rate to a first frame rate.

In some possible implementations, the first preset scenario indicates that the means of delivery is in the parking state, the second preset scenario indicates that the means of delivery is in the traveling state, the display device is configured to perform displaying at least one of operating condition information and navigation information of the means of delivery, and the first frame rate is less than the second frame rate.

In some possible implementations, the first preset scenario indicates that the means of delivery is in the parking state, the second preset scenario indicates that the means of delivery is in the traveling state, the display device is configured to display entertainment information, and the first frame rate is higher than the second frame rate.

In some possible implementations, the display device includes a first display device and a second display device. The first display device corresponds to a driver area of the cabin, and the second display device corresponds to a first area of the cabin. The first area includes one or more areas other than the driver area, and the controlling a display frame rate of a display device of the means of delivery based on the first preset scenario includes: when the first preset scenario indicates that a first user is located in the driver area and a second user is located in the first area, controlling a display frame rate of the first display device to be a third frame rate, and controlling a display frame rate of the second display device to be a fourth frame rate, where the third frame rate is higher than the fourth frame rate, and users include the first user and the second user.

In some possible implementations, the method further includes: obtaining resource occupation information, where the resource occupation information indicates a used resource capacity and/or an available resource capacity in a remaining resource of a computing unit, and the computing unit is associated with the display device. The controlling a display frame rate of a display device of the means of delivery based on the first preset scenario includes: controlling the display frame rate of the display device based on the resource occupation information and the first preset scenario.

In some possible implementations, the display device includes a third display device, the third display device is configured to perform displaying at least one of entertainment information and navigation information, and the controlling the display frame rate of the display device based on the resource occupation information and the first preset scenario includes: when the resource occupation information indicates that the used resource capacity is greater than or equal to a preset capacity threshold, and the first preset scenario indicates that the means of delivery is in the traveling state, controlling to decrease a display frame rate of the third display device.

In some possible implementations, the controlling the display frame rate of the display device includes: when detecting a touchscreen operation on the third display device, controlling to increase the display frame rate of the third display device.

In some possible implementations, the third display device includes one or more display devices other than an instrument screen.

In some possible implementations, the display device includes a fourth display device, the fourth display device is configured to perform displaying at least one of entertainment information and navigation information, and the controlling a display frame rate of a display device of the means of delivery based on the first preset scenario includes: when the first preset scenario indicates that the means of delivery is in the traveling state, and single-frame processing duration in first preset duration is greater than or equal to preset processing duration, controlling to decrease a display frame rate of the fourth display device.

According to a third aspect, a control apparatus is provided, where the apparatus includes a determining unit and a processing unit. The determining unit is configured to: determine a display frame rate of a display device based on at least one of an operating state of a means of delivery, a location of a user in a cabin of the means of delivery, a touchscreen operation on the display device of the means of delivery, and a type of an application to which an interface to be displayed by the display device belongs; and the processing unit is configured to control the display device to perform displaying at the display frame rate.

With reference to the third aspect, in some implementations of the third aspect, the apparatus further includes an adjustment unit, and the adjustment unit is configured to: adjust the display frame rate based on a change of at least one of the operating state, the location of the user in the cabin of the means of delivery, the touchscreen operation on the display device of the means of delivery, and the type of the application to which the interface to be displayed by the display device belongs.

With reference to the third aspect, in some implementations of the third aspect, the change of the operating state includes a transition between a traveling state and a parking state, or a change of an autonomous driving level.

With reference to the third aspect, in some implementations of the third aspect, the display device is configured to perform displaying at least one of operating condition information and navigation information of the means of delivery, and the adjustment unit is configured to: increase the display frame rate in response to the change of the operating state from the parking state to the traveling state; decrease the display frame rate in response to the change of the operating state from the traveling state to the parking state; increase the display frame rate in response to a decrease in the autonomous driving level of the means of delivery; or decrease the display frame rate in response to an increase in the autonomous driving level of the means of delivery.

With reference to the third aspect, in some implementations of the third aspect, the display device is configured to display entertainment information, and the adjustment unit is configured to: decrease the display frame rate in response to the change of the operating state from the parking state to the traveling state; increase the display frame rate in response to the change of the operating state from the traveling state to the parking state; decrease the display frame rate in response to a decrease in the autonomous driving level of the means of delivery; or increase the display frame rate in response to an increase in the autonomous driving level of the means of delivery.

With reference to the third aspect, in some implementations of the third aspect, the adjustment unit is configured to: increase the display frame rate in response to the user arriving at a location that is in the cabin and that corresponds to the display device; or decrease the display frame rate in response to the user leaving a location that is in the cabin and that corresponds to the display device.

With reference to the third aspect, in some implementations of the third aspect, the adjustment unit is configured to: decrease the display frame rate in response to no touchscreen operation occurring within predetermined time after the touchscreen operation; or increase the display frame rate in response to the touchscreen operation, where no touchscreen operation occurs within predetermined time before the touchscreen operation.

With reference to the third aspect, in some implementations of the third aspect, the display device includes a first display device and a second display device, the first display device corresponds to a first area in the cabin, and the second display device corresponds to a second area in the cabin. The determining unit is configured to: determine that a display frame rate of the first display device is different from a display frame rate of the second display device.

With reference to the third aspect, in some implementations of the third aspect, the determining unit is configured to: in response to there being no user in the first area and there being a user in the second area, determine that the display frame rate of the first display device is lower than the display frame rate of the second display device; in response to there being a user in the first area and there being no user in the second area, determine that the display frame rate of the first display device is higher than the display frame rate of the second display device; or in response to there being a user in the first area and a user in the second area, determine that the display frame rate of the first display device is higher than the display frame rate of the second display device, where the first area is a driver area of the cabin, and the second area includes one or more areas other than the driver area.

With reference to the third aspect, in some implementations of the third aspect, the determining unit is configured to: in response to a user touchscreen operation on the first display device within preset time and no user touchscreen operation on the second display device within the preset time, determine that the display frame rate of the first display device is higher than the display frame rate of the second display device; or in response to no user touchscreen operation on the first display device within preset time and a user touchscreen operation on the second display device within the preset time, determine that the display frame rate of the first display device is lower than the display frame rate of the second display device.

With reference to the third aspect, in some implementations of the third aspect, the determining unit is configured to: in response to a priority of a first application to which an interface to be displayed by the first display device belongs being higher than a priority of a second application to which an interface to be displayed by the second display device belongs, determine that the display frame rate of the first display device is higher than the display frame rate of the second display device; or in response to a priority of a first application to which an interface to be displayed by the first display device belongs being lower than a priority of a second application to which an interface to be displayed by the second display device belongs, determine that the display frame rate of the first display device is lower than the display frame rate of the second display device.

With reference to the third aspect, in some implementations of the third aspect, the determining unit is configured to determine the display frame rate based on resource occupation information, where the resource occupation information indicates a used resource capacity and/or an available resource capacity in a remaining resource of a computing unit, and the computing unit is associated with the display device.

With reference to the third aspect, in some implementations of the third aspect, the display device includes a third display device, the third display device is configured to perform displaying at least one of entertainment information and navigation information, and the determining unit is configured to: when the means of delivery is in the traveling state and the resource occupation information indicates that the used resource capacity is greater than or equal to a preset capacity threshold, determine that the display frame rate is a first frame rate; and when the means of delivery is in the traveling state and the resource occupation information indicates that the used resource capacity is less than the preset capacity threshold, determine that the display frame rate is a second frame rate, where the first frame rate is higher than the second frame rate.

With reference to the third aspect, in some implementations of the third aspect, the third display device includes one or more display devices other than an instrument screen.

With reference to the third aspect, in some implementations of the third aspect, the determining unit is configured to: when the means of delivery is in the traveling state, and single-frame processing duration in first preset duration is greater than or equal to preset processing duration, determine to decrease the display frame rate of the display device.

According to a fourth aspect, a control apparatus is provided, where the apparatus includes a determining unit and a processing unit. The determining unit is configured to: determine that a means of delivery is in a first preset scenario, where the first preset scenario is associated with at least one of an operating state of the means of delivery and a location of a user in a cabin of the means of delivery, and the operating state includes a traveling state or a parking state. The processing unit is configured to control a display frame rate of a display device of the means of delivery based on the first preset scenario.

According to a fifth aspect, a control apparatus is provided. The apparatus includes: a memory, configured to store a computer program; and a processor, configured to execute the computer program stored in the memory, to enable the apparatus to perform the method according to any one of the possible implementations of the first aspect or the second aspect.

According to a sixth aspect, a means of delivery is provided. The means of delivery includes the apparatus according to any one of the possible implementations of the third aspect to the fifth aspect and a display device.

With reference to the sixth aspect, in some implementations of the sixth aspect, the means of delivery is a vehicle.

According to a seventh aspect, a computer program product is provided. The computer program product includes computer program code, and when the computer program code is run on a computer, the computer is enabled to perform the method according to any one of the possible implementations of the first aspect or the second aspect.

It should be noted that the computer program code may be completely or partially stored in a first storage medium. The first storage medium may be encapsulated with a processor, or encapsulated separately from a processor.

According to an eighth aspect, a computer-readable medium is provided. The computer-readable medium stores instructions. When the instructions are executed by a processor, the processor is enabled to implement the method according to any one of the possible implementations of the first aspect or the second aspect.

According to a ninth aspect, a chip is provided. The chip includes a circuit, and the circuit is configured to perform the method according to any one of the possible implementations of the first aspect or the second aspect.

In this application, one or more of the operating state of the means of delivery, the location of the user in the cabin, the touchscreen operation on the display device of the means of delivery, and the type of the application to which the interface to be displayed by the display device belongs may be used, the display frame rate of the display device is dynamically adjusted, so that the display device can smoothly display a picture. This improves user experience. Specifically, when the means of delivery is in the traveling state, a display device that displays the navigation information and the operating condition information is controlled to perform displaying at a high display frame rate, to ensure that driving safety-related information is refreshed in real time at a high speed. This helps improve driving safety. When the means of delivery is in the parking state, the display device that displays the entertainment information is controlled to perform displaying at a high display frame rate, to ensure that entertainment-related information is refreshed in real time at a high speed. This helps improve entertainment experience of a user. In addition, according to the control method provided in this application, it can be further preferentially ensured that the display device in the driver area displays at a high frame rate, to help improve driving experience and driving safety of a driver user. Further, according to the control method provided in this application, the frame rate of the display device may be further adjusted based on the used resource capacity of the computing unit. When the used resource capacity of the computing unit is excessively high, a display frame rate of an opened display device is controlled to be decreased. This helps prevent frame freezing of the display device caused by the excessively high used resource capacity of the computing unit. When the used resource capacity of the computing unit is small, the display device is controlled to perform displaying at a high display frame rate, to improve image smoothness, and further improve user experience. When the means of delivery is in the traveling state, the used resource capacity of the computing unit is greater than or equal to the preset capacity threshold, and a display frame rate of a display device other than the display device that displays the operating condition information of the means of delivery is controlled to be decreased, and a display frame rate of the display device that displays the operating condition information, like an instrument screen is ensured. This helps improve driving safety and user experience. Further, a display frame rate of the touched display device may be increased based on a touchscreen behavior of the user, and a touch delay of the display device is decreased. This helps improve interaction experience when the user uses the display device. According to the control method provided in this application, when the processing capability of the computing platform is insufficient, the display frame rate of the display device is controlled to be decreased, to reduce a probability that frame freezing or frame loss occurs on the display device, and improve user experience.

### BRIEF DESCRIPTION OF DRAWINGS

FIG. 1 is a functional block diagram of a means of delivery according to an embodiment of this application;
FIG. 2 is a diagram of a cabin scenario according to an embodiment of this application;
FIG. 3 is a diagram of a system architecture required for implementing a control method according to an embodiment of this application;
FIG. 4 is a schematic flowchart of a control method according to an embodiment of this application;
FIG. 5(a)-1 to FIG. 5(d)-3 are diagrams of an application scenario of a control method according to an embodiment of this application;
FIG. 6 is another schematic flowchart of a control method according to an embodiment of this application;
FIG. 7(a)-1 to FIG. 7(b)-3 are other diagrams of an application scenario of a control method according to an embodiment of this application;
FIG. 8 is another schematic flowchart of a control method according to an embodiment of this application;
FIG. 9(a)-1 to FIG. 9(b)-3 are other diagrams of an application scenario of a control method according to an embodiment of this application;
FIG. 10 is another schematic flowchart of a control method according to an embodiment of this application;
FIG. 11 is still another schematic flowchart of a control method according to an embodiment of this application;
FIG. 12(a)-1 to FIG. 12(e)-4 are still other diagrams of an application scenario of a control method according to an embodiment of this application;
FIG. 13 is a block diagram of a control apparatus according to an embodiment of this application; and
FIG. 14 is a block diagram of a control apparatus according to an embodiment of this application.

### DESCRIPTION OF EMBODIMENTS

The following describes technical solutions of embodiments in this application with reference to accompanying drawings.

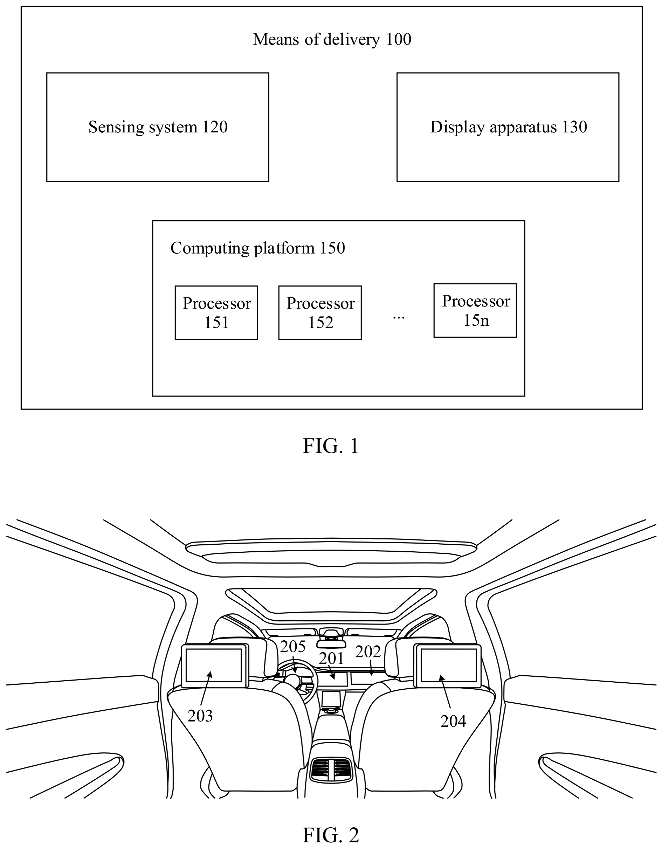

FIG. 1 is a functional block diagram of a means of delivery 100 according to an embodiment of this application. The means of delivery 100 may include a sensing system 120, a display apparatus 130, and a computing platform 150. The sensing system 120 may include one or more sensors that sense information about an ambient environment of the means of delivery 100. For example, the sensing system 120 may include a positioning system. The positioning system may be a global positioning system (global positioning system, GPS), or may be one or more of a BeiDou system, another positioning system, an inertial measurement unit (inertial measurement unit, IMU), a lidar, a millimeter-wave radar, an ultrasonic radar, and a camera apparatus. The sensing system 120 may further include a pressure sensor, disposed under a seat and configured to detect whether there is a user in the seat. The sensing system 120 may further include a sound wave sensor, configured to detect audio information in a cabin.

Some or all functions of the means of delivery 100 can be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a CPU, a microprocessor, a GPU (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable logic gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The means of delivery 100 may include an advanced driving assistance system (advanced driving assistant system, ADAS). The ADAS obtains information from around the means of delivery by using a plurality of sensors (including but not limited to: a lidar, a millimeter-wave radar, a camera apparatus, an ultrasonic sensor, a global positioning system, and an inertial measurement unit) in the means of delivery, and analyzes and processes the obtained information, to implement functions such as obstacle sensing, target recognition, means of delivery positioning, path planning, and user monitoring/reminder. In this way, security, automation, and comfort of the means of delivery are improved.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks that are of monitoring and responding to road conditions and that are at the levels L1 to L3 are jointly completed by the user and the system, and the user needs to take over a dynamic driving task. The levels L4 and L5 enable the user to be completely transformed into a passenger.

The display apparatus 130 in a cabin is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cabin, for example, a digital instrument screen, a central display, a display in front of a passenger in a front passenger seat (also referred to as a front-row passenger), a display in front of a rear-seat passenger on the left, and a display in front of a rear-seat passenger on the right. Even a window may be used as a display for display. Head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system.

In this embodiment of this application, the processor may obtain seat pressure information, face information of the user, audio information, and the like that are detected by the sensing system 120, and further combine an operating state of the means of delivery and/or at least one of the seat pressure information, the face information of the user, and the audio information, to control a display frame rate of the display apparatus 130. In some possible implementations, information such as the seat pressure information, the face information of the user, and the audio information may alternatively be stored in the memory in the computing platform 150 in a form of data.

It should be understood that the foregoing operations may be performed by a same processor, or may be performed by one or more processors. This is not specifically limited in embodiments of this application.

FIG. 2 is a diagram of a vehicle cabin scenario according to an embodiment of this application. A vehicle may be an example of the means of delivery 100 shown in FIG. 1. One or more vehicle-mounted displays (or referred to as vehicle-mounted screens) are disposed inside an intelligent cabin, including but not limited to a display 201 (or may be referred to as a central display), a display 202 (or may be referred to as a front passenger entertainment screen), a display 203 (or may be referred to as a rear screen of a driver's headrest), a display 204 (or may be referred to as a rear screen of the front passenger's headrest), and a display 205 (or may be referred to as an instrument screen). In some possible implementations, the display 201 may alternatively be a long screen extending to a front passenger area. One or more camera lenses may be installed in the cabin shown in FIG. 2, and configured to capture an image inside or outside the cabin, for example, a camera lens of a driver monitor system (driver monitor system, DMS), a camera lens of a cabin monitor system (cabin monitor system, CMS), and a camera lens of a dashcam (dashcam). Camera lenses configured to capture images inside and outside the cabin may be a same camera lens, or may be different camera lenses. In addition, one or more pressure sensors and sound wave sensors are further disposed in the cabin, to monitor whether there is a user in the cabin and a location of the user. Further, the displays 201 to 205 may display a graphical user interface (graphical user interface, GUI).

It should be understood that a display control method in the following embodiment is described by using a five-seat vehicle shown in FIG. 2 as an example. This is not limited in embodiments of this application. For example, a cabin of a seven-seat sport utility vehicle (sport/suburban utility vehicle, SUV) may include a central display, a front passenger entertainment screen, a rear screen of a driver's headrest, a rear screen of a front passenger's headrest, an entertainment screen in a left area of a third-row, and an entertainment screen in a right area of the third-row. For another example, a cabin of a bus may include a front-row entertainment screen and a rear-row entertainment screen; or may include a display in a driving area and an entertainment screen in a passenger area. In an implementation, the entertainment screen in the passenger area may alternatively be disposed on a top of the cabin.

In a current technical background, a quantity of frames of display data submitted by surface flinger to each of a plurality of display devices in the cabin per minute is fixed, and the quantity of frames of display data submitted by the surface flinger to each of the plurality of display devices may be the same. For example, the quantity of frames may be 60 fps. For the plurality of display devices, the surface flinger and a hardware composer (hardware composer, HWC) perform image compositing, rendering, and displaying without distinguishing. As a result, the plurality of display devices cannot all displaying at a highest frame rate (for example, 60 fps). Frame freezing and frame loss may be caused on the plurality of display devices. This severely affects user experience.

In view of this, embodiments of this application provide a control method and apparatus, and a means of delivery, to dynamically adjust a display frame rate of one or more display devices in a cabin based on an operating state of the means of delivery and/or location information of a user in the cabin of the means of delivery. This decreases a probability of frame freezing and frame loss in a display process of the display device, improves image smoothness, and further improves user experience.

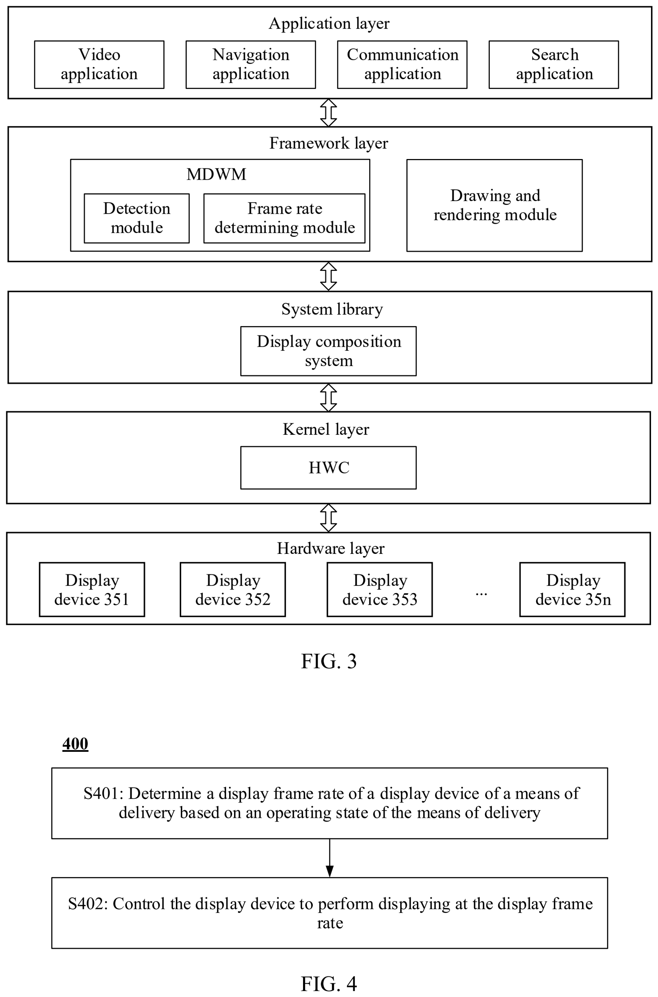

FIG. 3 is a block diagram of a system architecture required for implementing a control method according to an embodiment of this application. As shown in FIG. 3, in a layered architecture, control software is divided into several layers, each with a clear role and task. The layers communicate with each other through software interfaces. In some embodiments, a control system may be divided into five layers: an application layer, a framework (framework) layer, a system layer, a kernel (kernel) layer, and a hardware (hardware) layer from top to bottom.

The application layer may include a series of application packages. As shown in FIG. 3, the application packages may include applications such as a video application, a navigation application, a communication application, and a search application. The video application is used to provide a video playing function for a user. The navigation application is used to provide navigation information for the user. The communication application is used to provide a call function for the user. The search application is used to more conveniently obtain required information for the user.

The framework layer provides an application programming interface (application programming interface, API) and a programming framework for the application at the application layer. The framework layer may include some predefined functions. As shown in FIG. 3, the framework layer may include a multi-display window manager (multi-display window manager, MDWM) and a drawing and rendering module.

The MDWM includes a detection module and a frame rate determining module. The detection module is configured to: detect at least one of the following: an operating state of a means of delivery, a location of the user in a cabin, a touch signal of a display device, a type of an application to which an interface to be displayed by the display device belongs, a used resource capacity of a computing unit, and duration required for single-frame processing; and send a detection result to the frame rate determining module, so that the frame rate determining module determines, based on the detection result, a target frame rate corresponding to the display device. The target frame rate is a frame rate at which a surface flinger performs data composition for display, namely, a display frame rate of the display device at the hardware layer.

A system library may include a plurality of functional modules. For example, as shown in FIG. 3, the system library may include the surface flinger.

For example, after an application (for example, the video application) is triggered by the surface flinger to perform drawing and rendering, the application invokes a drawing and rendering thread of the drawing and rendering module to perform drawing and rendering on layer data sent by the application layer, and sends data obtained through drawing and rendering to the surface flinger for compositing.

In embodiments of this application, the frame rate determining module in the MDWM sends, to the surface flinger, the target frame rate that corresponds to the display device and that is determined based on the detection result, so that the surface flinger controls, based on the target frame rate, composition of data used by the display device for display.

The kernel layer is a layer between hardware and software. The kernel layer includes at least an HWC, and the HWC is configured to combine and display image data by using hardware. The HWC is configured to: receive a layer and the target frame rate that are sent by the surface flinger, process the layer based on the target frame rate, and send the layer to one or more display devices at the hardware layer for display.

Display devices 351 to 35n at the hardware layer may include one or more kinds of the display apparatus 130 in FIG. 1, or the display devices 351 to 35n may include one or more of the displays 201 to 205 shown in FIG. 2.

It should be understood that the foregoing modules and apparatus are merely examples. In actual application, the foregoing modules and apparatus may be added or deleted according to an actual requirement.

FIG. 4 is a schematic flowchart of a control method 400 according to an embodiment of this application. The method 400 may be applied to the means of delivery 100 shown in FIG. 1, or the method 400 may be performed by the system shown in FIG. 3. More specifically, the method 400 may be performed by the MDWM shown in FIG. 3. The method 400 includes the following.

S401: Determine a display frame rate of a display device of a means of delivery based on an operating state of the means of delivery.

For example, the means of delivery may include the means of delivery shown in FIG. 1.

For example, the operating state may include a traveling state or a parking state, or may further include an autonomous driving level of the means of delivery.

In an example, the operating state of the means of delivery may be determined based on gear information of the means of delivery. For example, when the means of delivery is in a reverse (reverse, R) gear or a drive (drive, D) gear, it is determined that the means of delivery is in the traveling state; or when the means of delivery is in a parking (parking, P) gear, it is determined that the means of delivery is in the parking state.

In another example, the operating state of the means of delivery may be determined based on a speed of the means of delivery. For example, when the speed of the means of delivery is greater than a preset speed threshold, it is determined that the means of delivery is in the traveling state. When the speed of the means of delivery is less than or equal to the preset speed threshold, it is determined that the means of delivery is in the parking state. For example, the preset speed threshold may be 0 kilometers per hour (kilometers per hour, kph), or may be 5 kph, or may be another value.

For example, the display device may include the display apparatus 130 shown in FIG. 1, or the display device may include at least one of the displays 201 to 205 shown in FIG. 2, or the display device may include at least one of the display devices 351 to 35n shown in FIG. 3.

In some possible implementations, a relationship between an operating state of a means of delivery and a display frame rate of a display device may be preset, as shown in Table 1.

**Table 1**

| Operating state of a means of delivery | Display device and display frame rate |
|---|---|
| Traveling state | Instrument screen (display 205): 60 fps |
| | AR-HUD: 60 fps |
| | Central display (display 201): 30 fps |
| | Front passenger entertainment screen (display 202): 30 fps |
| Parking state | Instrument screen (display 205): 30 fps |
| | AR-HUD: 0 fps |
| | Central display (display 201): 60 fps |
| | Front passenger entertainment screen (display 202): 60 fps |
| An autonomous driving level is L0 | Instrument screen (display 205): 60 fps |
| | AR-HUD: 60 fps |
| | Central display (display 201): 30 fps |
| | Front passenger entertainment screen (display 202): 30 fps |
| An autonomous driving level is L3 | Instrument screen (display 205): 30 fps |
| | AR-HUD: 30 fps |
| | Central display (display 201): 60 fps |
| | Front passenger entertainment screen (display 202): 60 fps |

As shown in Table 1, when the means of delivery is in the traveling state, a display device that displays operating condition information and/or navigation information, like the instrument screen or the AR-HUD, is controlled to perform displaying at a high display frame rate, and a display device that displays entertainment information, like the central display or the front passenger entertainment screen, is controlled to perform displaying at a low display frame rate. When the means of delivery is in the parking state, the display device that displays the operating condition information and/or the navigation information, like the instrument screen or the AR-HUD, is controlled to perform displaying at a low display frame rate, and the display device that displays the entertainment information, like the central display or the front passenger entertainment screen, is controlled to perform displaying at a high display frame rate. When the autonomous driving level of the means of delivery is low, the display device that displays the operating condition information and/or the navigation information, like the instrument screen or the AR-HUD, is controlled to perform displaying at a high display frame rate, and the display device that displays the entertainment information, like the central display or the front passenger entertainment screen, is controlled to perform displaying at a low display frame rate. When the autonomous driving level is high, the display device that displays the operating condition information and/or the navigation information, like the instrument screen or the AR-HUD, is controlled to perform displaying at a low display frame rate, and the display device that displays the entertainment information, like the central display or the front passenger entertainment screen, is controlled to perform displaying at a high display frame rate.

In specific implementation, when the means of delivery is in different operating states, display frame rates of one or more display devices in a cabin may be determined based on a specific operating state.

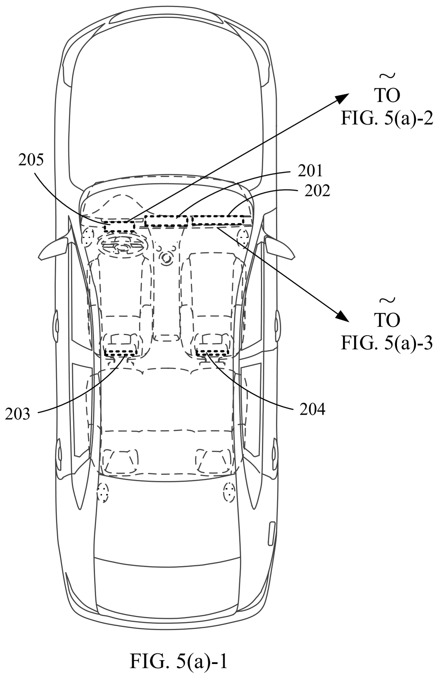

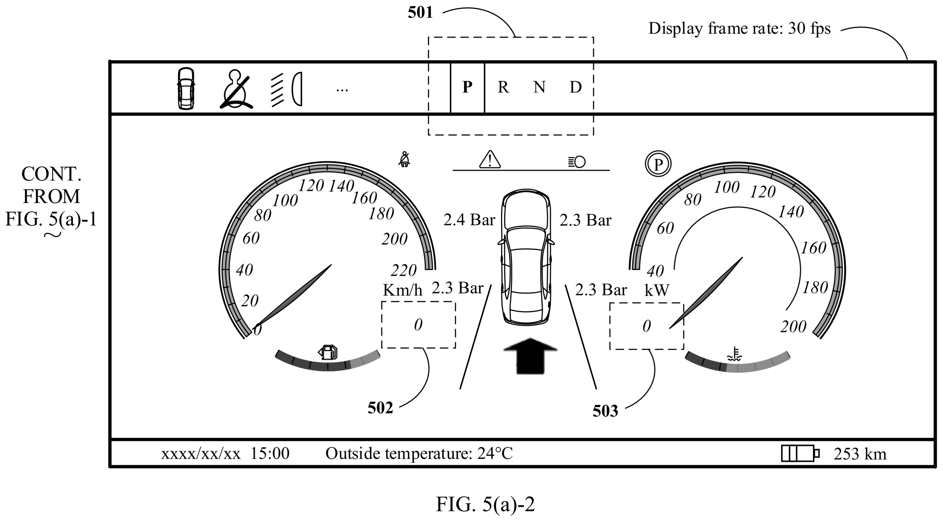

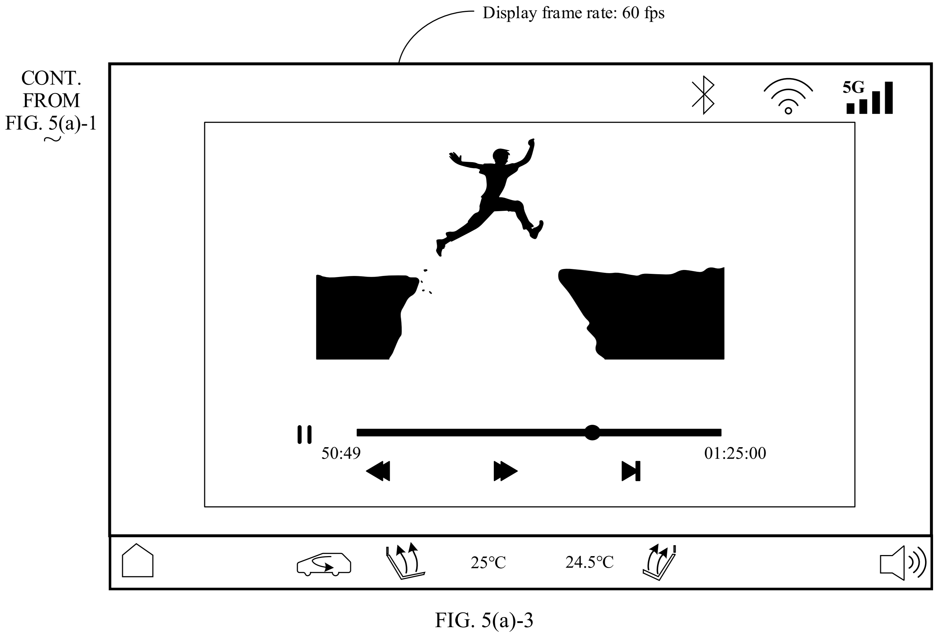

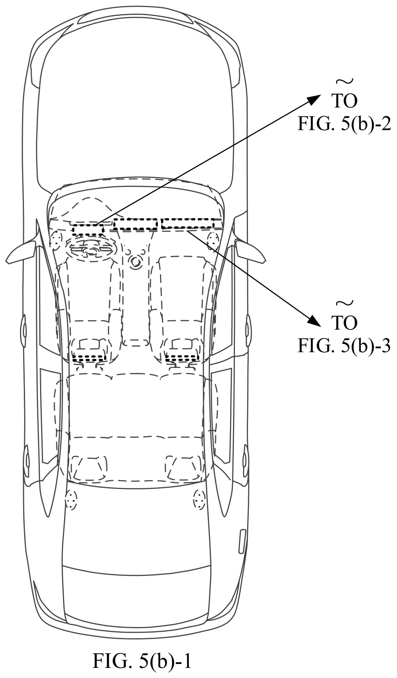

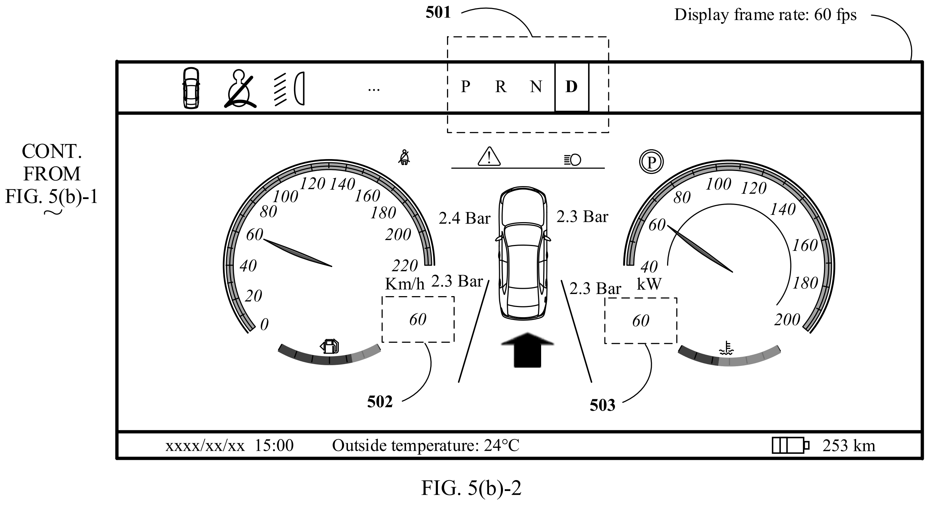

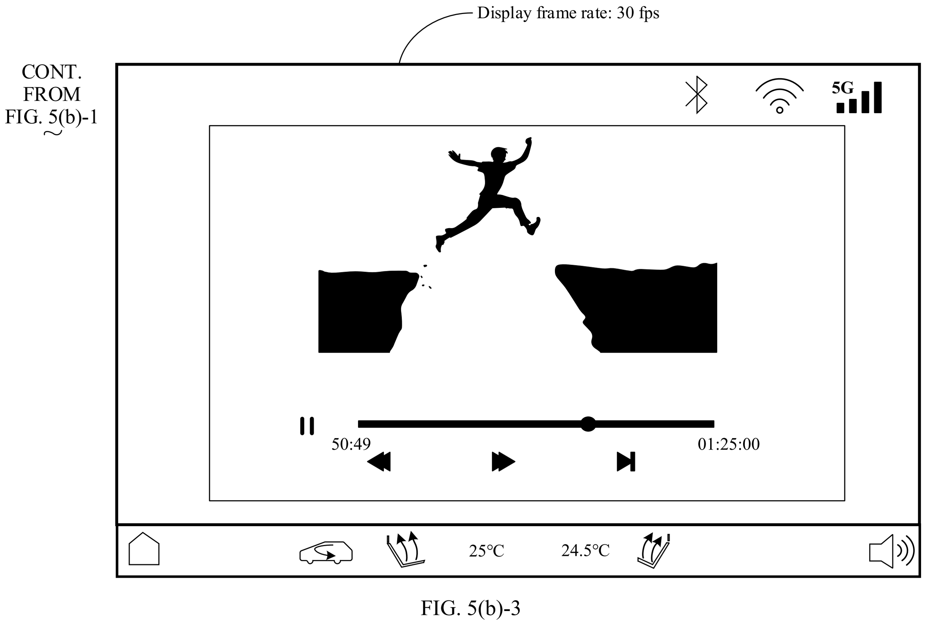

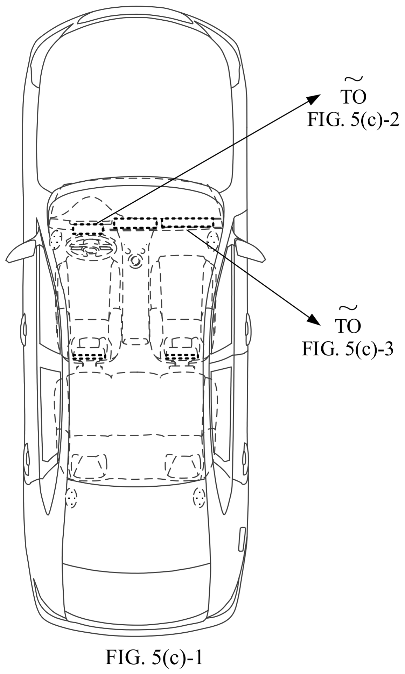

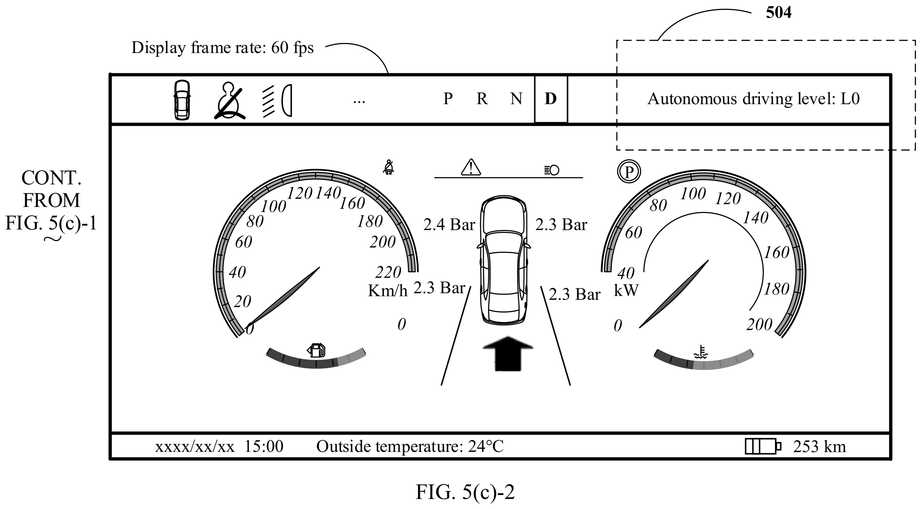

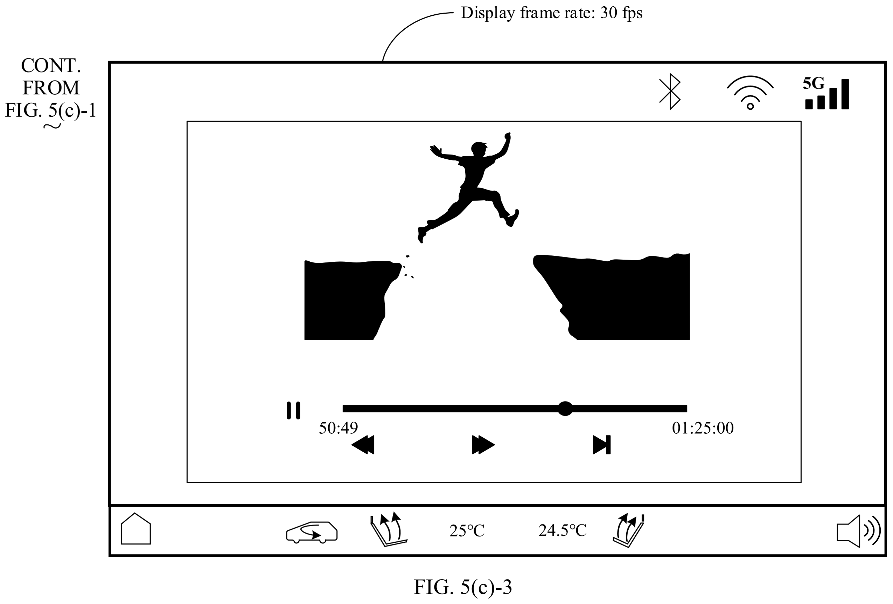

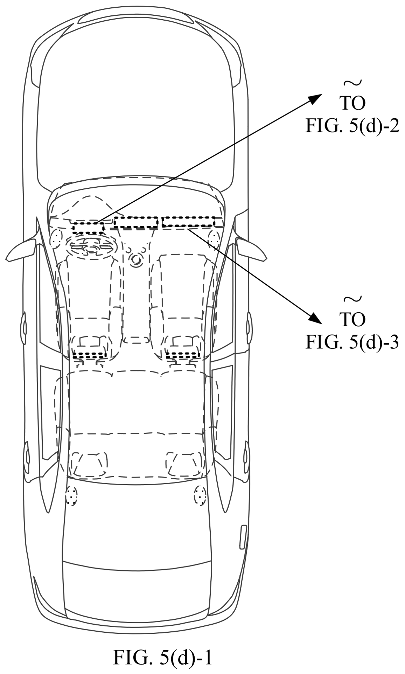

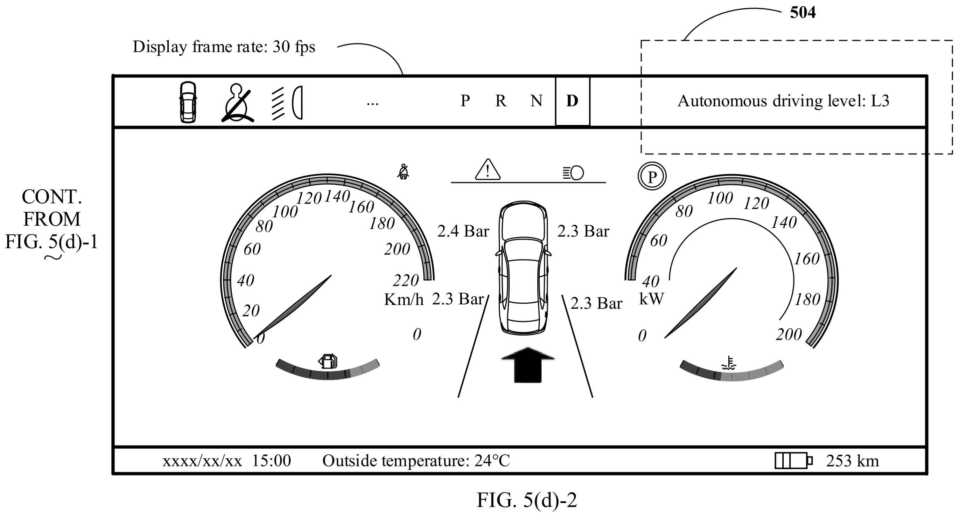

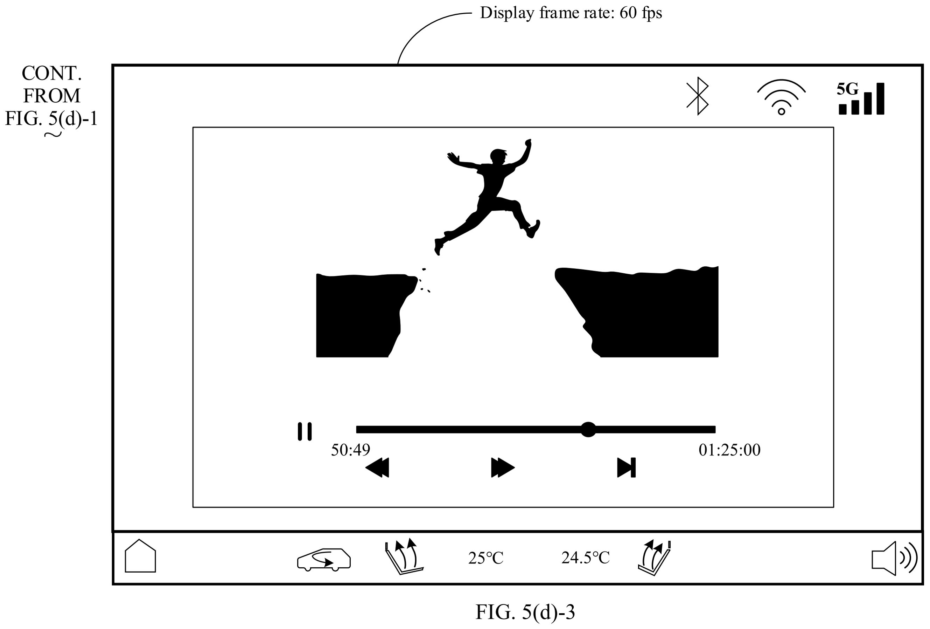

For example, the means of delivery is a five-seat vehicle, and an in-vehicle cabin includes the displays 201 to 205. As shown in FIG. 5(a)-1 to FIG. 5(d)-3, when the vehicle is in different operating states, the display in the cabin may display at different frame rates.

As shown in FIG. 5(a)-1 to FIG. 5(a)-3, a gear bar 501 displayed on the display 205 indicates that the vehicle is in a P gear, and a speed information bar 502 and a power information bar 503 indicate that a speed and power of the vehicle are separately zero, that is, the vehicle is currently in the parking state. When a display device is the display 205 that displays operating condition information, it may be determined that a display frame rate of the display device is a low display frame rate, for example, 30 fps. When the display device is the display 202 that displays entertainment information, it may be determined that the display frame rate of the display device is a high display frame rate, for example, 60 fps.

As shown in FIG. 5(b)-1 to FIG. 5(b)-3, the gear bar 501 displayed on the display 205 indicates that the vehicle is in a D gear, and the speed information bar 502 and the power information bar 503 indicate that the speed and the power of the vehicle are respectively 60 km/h and 60 kW, that is, the vehicle is currently in the traveling state. When the display device is the display 205 that displays the operating condition information, it may be determined that the display frame rate of the display device is a high display frame rate, for example, 60 fps. When the display device is the display 202 that displays the entertainment information, it may be determined that the display frame rate of the display device is a low display frame rate, for example, 30 fps.

As shown in FIG. 5(c)-1 to FIG. 5(c)-3, an information bar 504 of the display 205 indicates that the autonomous driving level of the vehicle is L0. In this case, when the display device is the display 205 that displays the operating condition information, it may be determined that the display frame rate of the display device is a high display frame rate, for example, 60 fps. When the display device is the display 202 that displays the entertainment information, it may be determined that the display frame rate of the display device is a low display frame rate, for example, 30 fps.

As shown in FIG. 5(d)-1 to FIG. 5(d)-3, the information bar 504 of the display 205 indicates that the autonomous driving level of the vehicle is L3. In this case, when the display device is the display 205 that displays the operating condition information, it may be determined that the display frame rate of the display device is a low display frame rate, for example, 30 fps. When the display device is the display 202 that displays the entertainment information, it may be determined that the display frame rate of the display device is a high display frame rate, for example, 60 fps.

S402: Control the display device to perform displaying at the display frame rate.

In some possible implementations, the display frame rate of the display device may be alternatively adjusted based on a change of the operating state of the means of delivery. The change of the operating state includes a transition between the traveling state and the parking state, or a change of the autonomous driving level.

For example, with reference to Table 1, when the means of delivery changes from the traveling state to the parking state, or when the autonomous driving level of the means of delivery is increased, a display frame rate of the display device that displays the operating condition information and/or the navigation information, like the instrument screen or the AR-HUD, may be decreased, and a display frame rate of the display device that displays the entertainment information, like the central display or the front passenger entertainment screen may be increased. When the means of delivery changes from the parking state to the traveling state, or when the autonomous driving level of the means of delivery is decreased, the display frame rate of the display device that displays the operating condition information and/or the navigation information, like the instrument screen or the AR-HUD, may be increased, and the display frame rate of the display device that displays the entertainment information, like the central display or the front passenger entertainment screen, is decreased.

According to the control method provided in embodiments of this application, the display frame rate of the display device may be dynamically adjusted based on the operating state of the means of delivery, so that the display device can smoothly display a picture. This improves user experience. When the means of delivery is in the traveling state, the display device that displays the navigation information and the operating condition information is controlled to perform displaying at a high display frame rate, to ensure that driving safety-related information is refreshed in real time at a high speed. This helps improve driving safety. When the means of delivery is in the parking state, the display device that displays the entertainment information is controlled to perform displaying at a high display frame rate, to ensure that entertainment-related information is refreshed in real time at a high speed. This helps improve entertainment experience of a user.

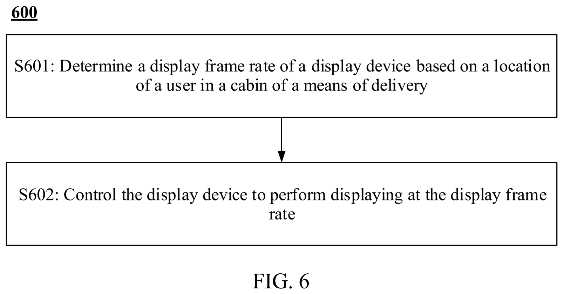

FIG. 6 is a schematic flowchart of a control method 600 according to an embodiment of this application. The method 600 may be applied to the means of delivery 100 shown in FIG. 1, or the method 600 may be performed by the system shown in FIG. 3, and more specifically, the method 600 may be performed by the MDWM shown in FIG. 3. The method 600 includes the following.

S601: Determine a display frame rate of a display device based on a location of a user in a cabin of a means of delivery.

For example, the means of delivery may include the means of delivery in the foregoing embodiments, and the display device may include the display device in the foregoing embodiments.

For example, that the means of delivery may determine the location of the user in the cabin based on sensor information includes but is not limited to: determining, by using an acoustic wave sensor, whether a user is in position at a seat; determining, by using a camera apparatus or an in-cabin vision sensor, whether a user is in position at a seat; and determining, by using a pressure sensor disposed at a seat, whether a user is in position at the seat.

In some possible implementations, a relationship between a location of a user in a cabin and a display frame rate of a display device may be preset, as shown in Table 2.

**Table 2**

| Quantity of users and location of a user in a cabin | Display device and display frame rate |
|---|---|
| There is no user in a driver's seat | Instrument screen (display 205): 30 fps |
| | Central display (display 201): 30 fps |
| | Front passenger entertainment screen (display 202): 0 fps or 30 fps |
| There is a user in a driver's seat, and there is no user in another position | Instrument screen (display 205): 60 fps |
| | Central display (display 201): 60 fps |
| | Front passenger entertainment screen (display 202): 0 fps or 30 fps |
| There is no user in a front passenger's seat | Instrument screen (display 205): 30 fps |
| | Central display (display 201): 30 fps |
| | Front passenger entertainment screen (display 202): 30 fps |
| There is a user in a front passenger's seat, and there is no user in another position | Instrument screen (display 205): 30 fps |
| | Central display (display 201): 30 fps |
| | Front passenger entertainment screen (display 202): 60 fps |
| 2 persons (driver+front passenger) | Instrument screen (display 205): 60 fps |
| | Central display (display 201): 60 fps |
| | Front passenger entertainment screen (display 202): 30 fps |
| 3 persons (driver+front passenger+person at a rear-row seat) | Instrument screen (display 205): 60 fps |
| | Central display (display 201): 60 fps |
| | Front passenger entertainment screen (display 201): 30 fps |
| | Rear-row screen (display 203 or 204): 30 fps |

As shown in Table 2, when there is only one user in the cabin, a display frame rate of a display device corresponding to a location of the user in the cabin may be preferentially ensured, and the display device is controlled to perform displaying at a high display frame rate. When there are a plurality of users in the cabin, and the plurality of users include a user in a driver area, a display frame rate of a display device corresponding to the driver area is preferentially ensured, and the display device is controlled to perform displaying at a high display frame rate.

It should be noted that a display device corresponding to a location includes: Content displayed by the display device is mainly viewed by a user at the location. That a display device corresponds to an area, or an area corresponds to a display device includes: Content displayed by the display device is mainly viewed by a user in the area; or the area includes the display device. In this embodiment of this application, an area in the cabin may include a specific location. For example, the driver area includes a location of a driver.

For example, if the area is a driver area, the display device may include at least one of an instrument screen, an AR-HUD, and a central display. If the area is a front passenger area, the display device may be a front passenger screen, for example, the display 202. If the area is a left area in a second row of the means of delivery, the display device may be a rear screen of a driver's headrest, for example, the display 203. If the area is a right area in the second row of the means of delivery, the display device may be a screen at the rear of a front passenger's headrest, for example, the display 204.

In specific implementation, the display frame rate of the one or more display devices in the cabin is determined based on an actual location of the user in the cabin.

In some possible implementations, when the display device includes two or more display devices, for example, includes a display device 1 and a display device 2, it may be determined, based on a location of the user in the cabin, that a display frame rate of the display device 1 is different from a display frame rate of the display device 2. In an example, with reference to Table 2, the display device 1 is a central display corresponding to the driver area and the display device 2 is a front passenger entertainment screen corresponding to the front passenger area. When there is a user in the driver area and there is no user in the front passenger area, it is determined that the display frame rate (for example, 60 fps) of the display device 1 is higher than the display frame rate (for example, 0 fps or 30 fps) of the display device 2. When there is no user in the driver area and there is a user in the front passenger area, it is determined that the display frame rate (for example, 30 fps) of the display device 1 is lower than the display frame rate (for example, 60 fps) of the display device 2. When there are users in both the driver area and the front passenger area, it is determined that the display frame rate (for example, 60 fps) of the display device 1 is higher than the display frame rate (for example, 30 fps) of the display device 2. In still another example, with reference to Table 2, the display device 1 is a central display corresponding to the driver area and the display device 2 is a rear screen of a driver's headrest corresponding to a left area in a rear row. When there are users in both the driver area and the left area in the rear row, it is determined that the display frame rate (for example, 60 fps) of the display device 1 is higher than the display frame rate (for example, 30 fps) of the display device 2.

S602: Control the display device to perform displaying at the display frame rate.

In some possible implementations, the display frame rate of the display device may be alternatively adjusted based on a change of a location of the user in the cabin. For example, the display frame rate of the display device is increased in response to the user arriving at a location that is in the cabin and that corresponds to the display device; or the display frame rate of the display device is decreased in response to the user leaving a location that is in the cabin and that corresponds to the display device.

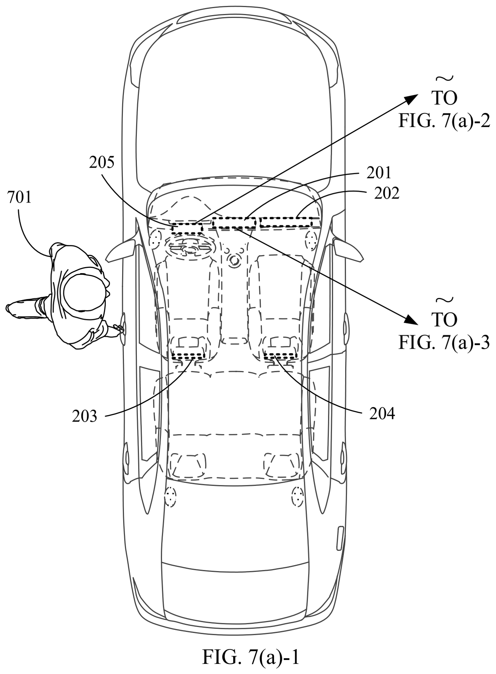

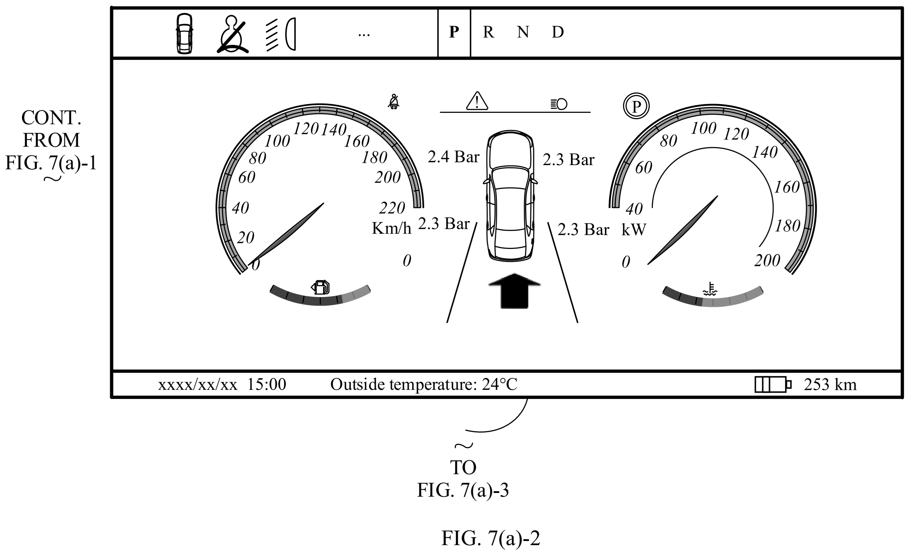

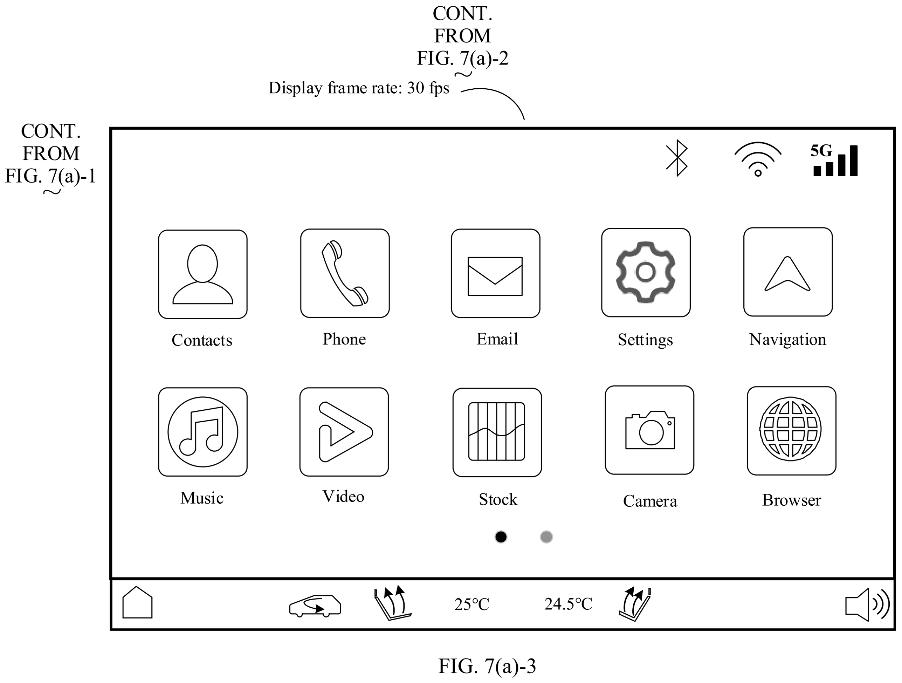

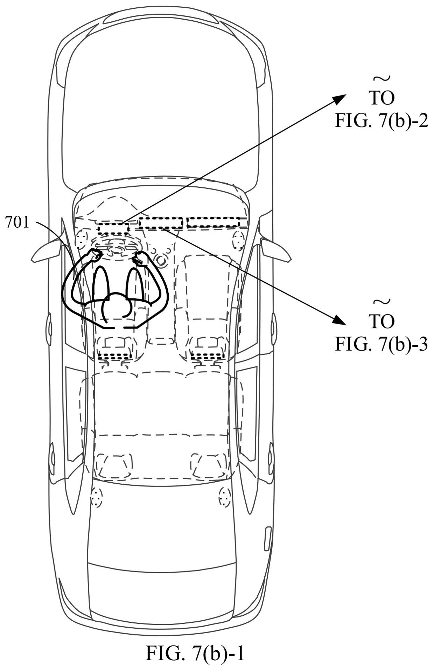

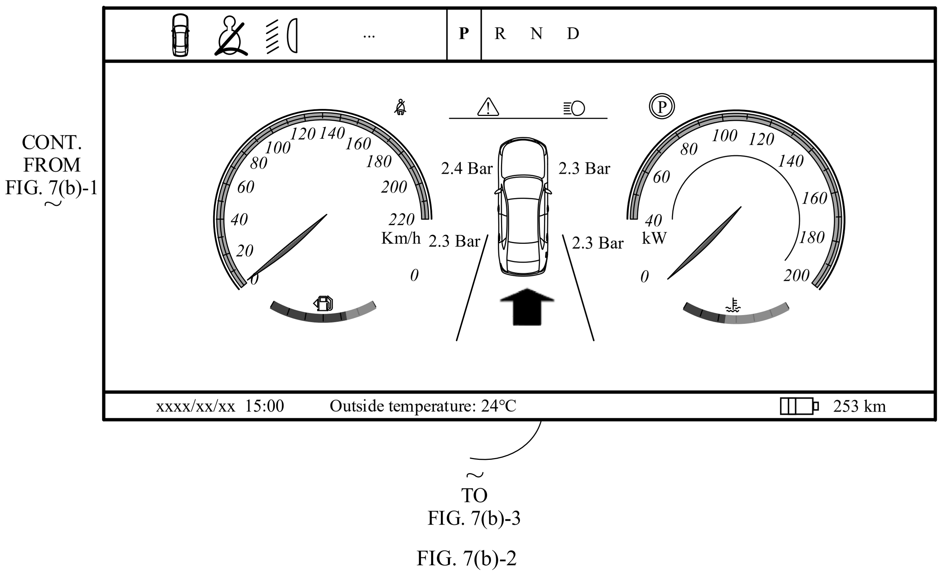

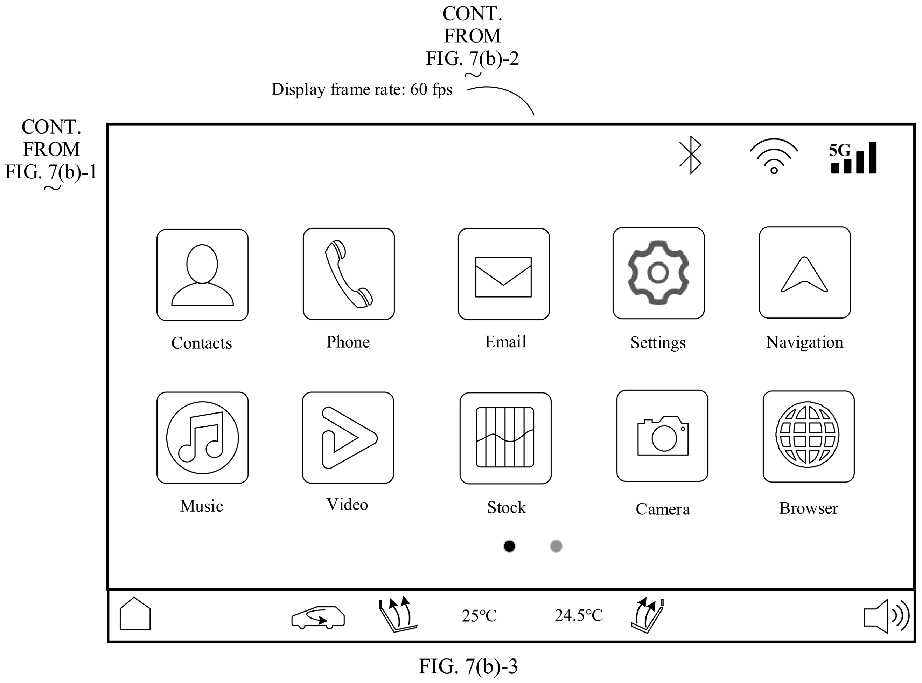

For example, the means of delivery is a five-seat vehicle, and an in-vehicle cabin includes the displays 201 to 205. As shown in FIG. 7(a)-1 to FIG. 7(b)-3, when a location of the user in the cabin changes, a display frame rate of the display in the cabin may be adjusted.

As shown in FIG. 7(a)-1 to FIG. 7(a)-3, before a user 701 enters a driver area, display frame rates of the displays 201 and 205 corresponding to the driver area are both 30 fps. As shown in FIG. 7(b)-1 to FIG. 7(b)-3, when the user 701 is seated in the driver area, the display frame rates of the displays 201 and 205 corresponding to the driver area may be increased to 60 fps. Further, after the user 701 leaves the driver area, display frame rates of the displays 201 and 205 corresponding to the driver area may be further decreased to 30 fps.

According to the control method provided in this embodiment of this application, the display frame rate of the display device may be dynamically adjusted based on the location of the user in the cabin, to preferentially ensure that a display device corresponding to an area with a user in the cabin displays at a high frame rate. This helps improve user experience. Further, when there is a user in a plurality of areas including the driver area, it is preferentially ensured that the display device in the driver area displays at a high frame rate. This helps improve driving experience and driving safety of a driver user.

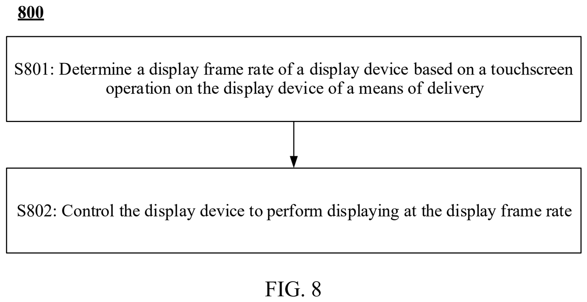

FIG. 8 is a schematic flowchart of a control method 800 according to an embodiment of this application. The method 800 may be applied to the means of delivery 100 shown in FIG. 1, or the method 800 may be performed by the system shown in FIG. 3. More specifically, the method 800 may be performed by the MDWM shown in FIG. 3. The method 800 includes the following.

S801: Determine a display frame rate of a display device based on a touchscreen operation on the display device of a means of delivery.

For example, the means of delivery may include the means of delivery in the foregoing embodiments, and the display device may include the display device in the foregoing embodiments.

In some possible implementations, when the display device displays at a display frame rate lower than a full frame rate of the display device, the display frame rate of the display device is increased in response to the touchscreen operation on the display device. No touchscreen operation occurs within predetermined time before the touchscreen operation. Further, if the touchscreen operation does not continue to occur within predetermined time after the touchscreen operation, the display frame rate of the display device may be decreased.

For example, the full frame rate of the display device is 60 fps. When the display device displays at 30 fps, if a touchscreen operation on the display device is detected, the display frame rate of the display device may be controlled to be increased to 60 fps. For example, the display frame rate of the display device may be controlled to be directly increased from 30 fps to 60 fps (which may be understood as an instantaneous increase). Alternatively, the display frame rate of the display device may be controlled to be increased from 30 fps to 60 fps at a fixed rate (which may be understood as a gradual increase). For example, the fixed rate may be 30 fps/s, or may be another rate.

For example, the predetermined time may be 3 seconds, or may be 5 seconds, or may be other duration.

In this embodiment of this application, the full frame rate may be understood as a maximum display frame rate supported by the display device.

In some possible implementations, when two or more display devices in the cabin display, if a touchscreen operation on a display device is detected, a display frame rate of the display device is controlled to be increased, and a display frame rate of another display device that does not detect a touchscreen signal may be decreased.

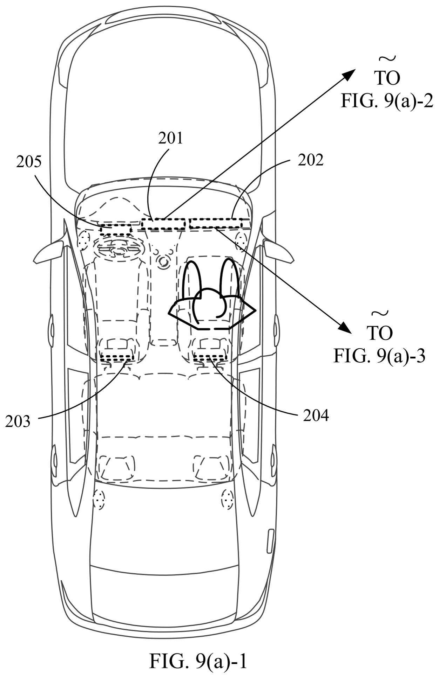

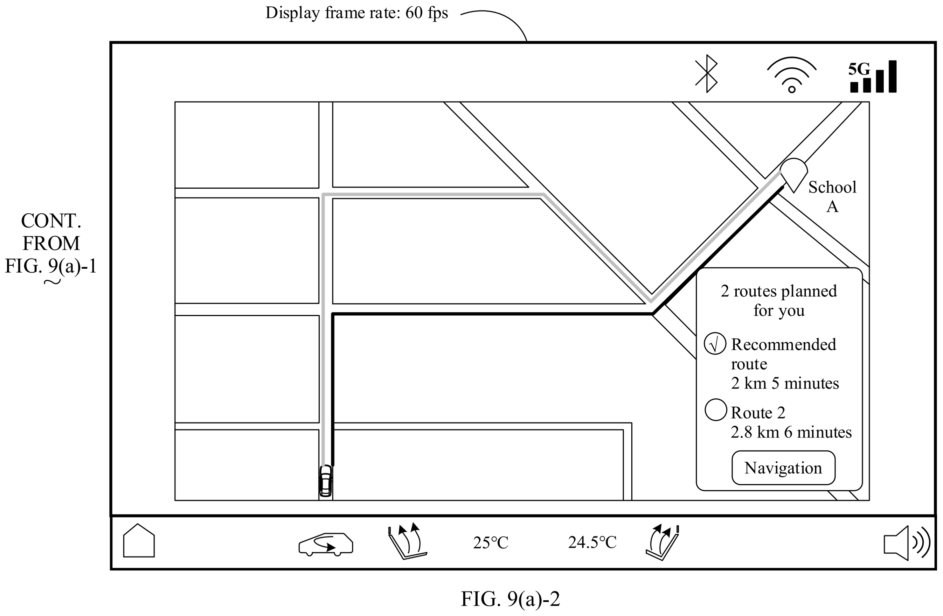

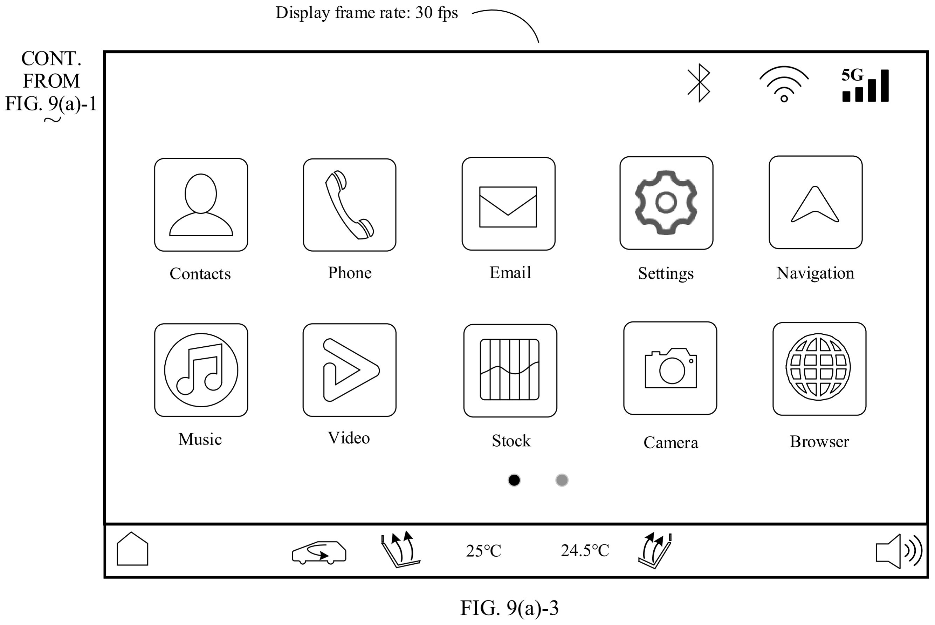

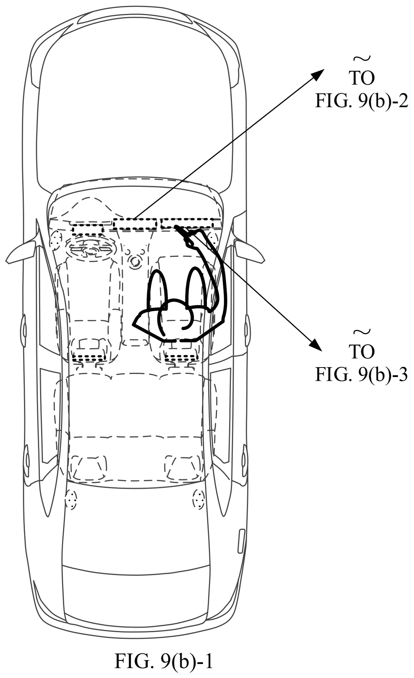

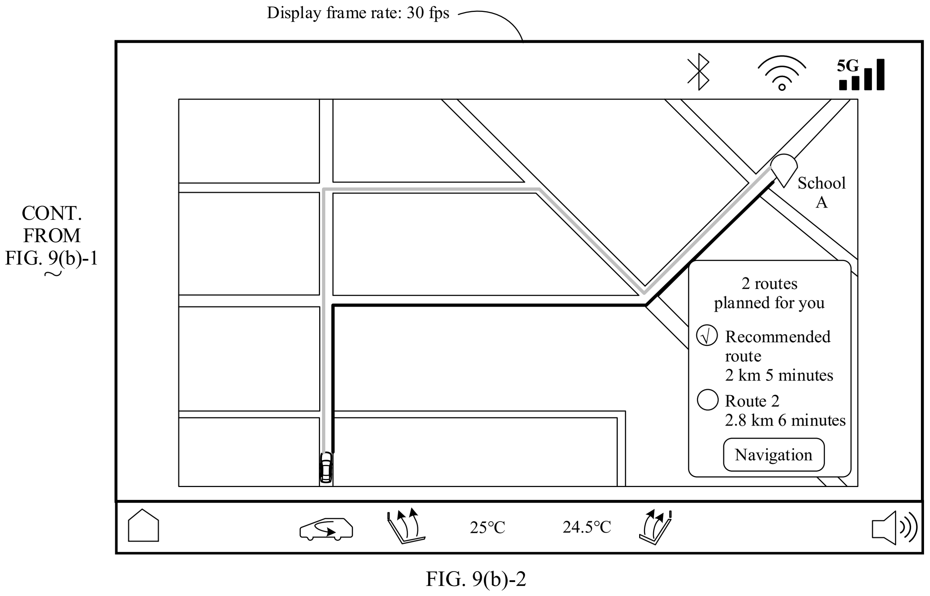

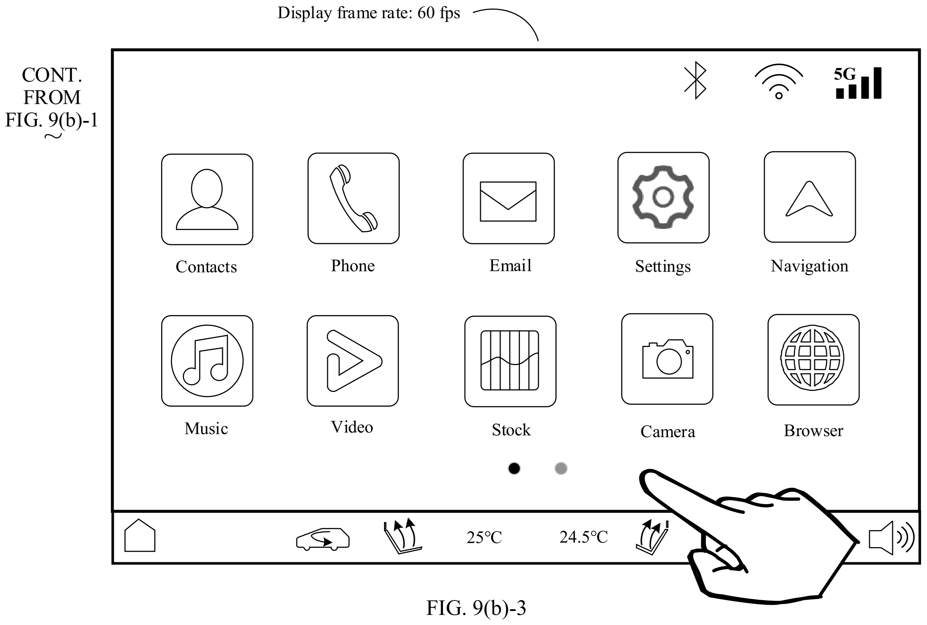

For example, the means of delivery is a five-seat vehicle, and an in-vehicle cabin includes the displays 201 to 205. As shown in FIG. 9(a)-1 to FIG. 9(b)-3, when a touchscreen operation on one display is detected, a display frame rate of the display in the cabin may be adjusted.

As shown in FIG. 9(a)-1 to FIG. 9(a)-3, the display 201 and the display 202 respectively display at display frame rates of 60 fps and 30 fps. When a touch signal for the display 202 is detected (as shown in FIG. 9(b)-1 to FIG. 9(b)-3), a display frame rate of the display 202 may be increased to 60 fps, and a display frame rate of the display 201 may be decreased to 30 fps.

S802: Control the display device to perform displaying at the display frame rate.

According to the control method provided in this embodiment of this application, the display frame rate of the display device can be dynamically adjusted based on the touchscreen operation on the display device of the means of delivery. A display frame rate of a touched display device is improved based on a screen touching behavior of the user, and a touch delay of the display device is decreased. This helps improve interaction experience when the user uses the display device. When there are a plurality of display devices in the cabin for display, a display frame rate of a touched display device is increased based on a touchscreen operation on the display device, and a display frame rate of an untouched display device is decreased, so that energy consumption of the display device during display can be decreased, and intelligence of the display device and means of delivery is improved.

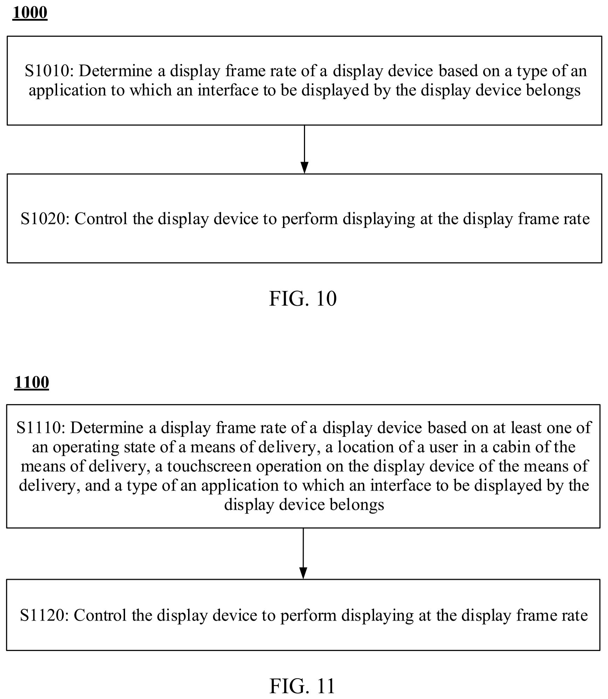

FIG. 10 is a schematic flowchart of a control method 1000 according to an embodiment of this application. The method 1000 may be applied to the means of delivery 100 shown in FIG. 1, or the method 1000 may be performed by the system shown in FIG. 3. More specifically, the method 1000 may be performed by the MDWM shown in FIG. 3. The method 1000 includes the following.

S1010: Determine a display frame rate of a display device based on a type of an application to which an interface to be displayed by the display device belongs.

For example, the means of delivery may include the means of delivery in the foregoing embodiments, and the display device may include the display device in the foregoing embodiments.

For example, the type of the application may include but is not limited to an entertainment type, a driving type, and a communication type. The entertainment-type application may include an audio application, a video application, a game application, and the like. The driving-type application may include a navigation application, a driving assistance application, and the like. The communication-type application may include a call application, a chat application, and the like.

In some possible implementations, a relationship between a type of an application to which an interface to be displayed by a display device belongs and a display frame rate of the display device may be preset, as shown in Table 3.

**Table 3**

| Type of an application | Display frame rate of a display device |
|---|---|
| Driving-type application | Central display (display 201): 60 fps |
| | Other displays (displays 202 to 204): 30 fps |
| Entertainment-type application | Central display (display 201): 30 fps |
| | Other displays (displays 202 to 204): 60 fps |
| Communication-type application | Central display (display 201): 30 fps |
| | Other displays (displays 202 to 204): 30 fps |

As shown in Table 3, when the display device is the central display, and a to-be-displayed interface of the central display belongs to the driving-type application, it is determined that a display frame rate of the central display is 60 fps. When the to-be-displayed interface of the central display belongs to the entertainment-type application or the communication-type application, it is determined that the display frame rate of the central display is 30 fps. When the display device is one of the other displays, and a to-be-displayed interface of the display belongs to the entertainment-type application, it is determined that a display frame rate of the display is 60 fps. When the to-be-displayed interface of the display belongs to the driving-type application or the communication-type application, it is determined that the display frame rate of the display is 30 fps.

In some possible implementations, a correspondence between a priority of an application and a display frame rate of a display device may be further preset, and the display frame rate of the display device is further determined based on the priority of the application.

As shown in Table 4, the driving-type application has a highest priority, and a display frame rate of the driving-type application may be 60 fps; the entertainment-type application has a medium priority, and a display frame rate of the entertainment-type application may be 45 fps; and the communication-type application has a lowest priority, and a display frame rate of the communication-type application may be 30 fps.

**Table 4**

| Type of an application | Priority | Display frame rate of a display device |
|---|---|---|
| Driving-type application | High | 60 fps |
| Entertainment-type application | Medium | 45 fps |
| Communication-type application | Low | 30 fps |

In some possible implementations, with reference to Table 4, when the display device includes two or more display devices, for example, includes a display device 3 and a display device 4, it is determined, based on priorities of applications to which interfaces to be displayed by the display device 3 and the display device 4 belong, that a display frame rate of the display device 3 is different from a display frame rate of the display device 4. For example, the to-be-displayed interface of the display device 3 belongs to the driving-type application, and the to-be-displayed interface of the display device 4 belongs to the entertainment-type application. Because a priority of the driving-type application is higher than a priority of the entertainment-type application, it is determined that the display frame rate (for example, 60 fps) of the display device 3 is higher than the display frame rate (for example, 45 fps) of the display device 4. The to-be-displayed interface of the display device 3 belongs to the communication-type application, and the to-be-displayed interface of the display device 4 belongs to the entertainment-type application. Because a priority of the communication-type application is lower than the priority of the entertainment-type application, it is determined that the display frame rate (for example, 30 fps) of the display device 3 is lower than the display frame rate (for example, 45 fps) of the display device 4.

S1020: Control the display device to perform displaying at the display frame rate.

According to the control method provided in this embodiment of this application, the display frame rate of the display device can be dynamically adjusted based on the type of the application to which the interface to be displayed by the display device belongs. This helps improve intelligence of the display device and the means of delivery.

FIG. 11 is a schematic flowchart of a control method 1100 according to an embodiment of this application. The method 1100 may be applied to the means of delivery 100 shown in FIG. 1, or the method 1100 may be performed by the system shown in FIG. 3. More specifically, the method 100 may be performed by the MDWM shown in FIG. 3. The method 1000 includes the following.

S1110: Determine a display frame rate of a display device based on at least one of an operating state of a means of delivery, a location of a user in a cabin of the means of delivery, a touchscreen operation on the display device of the means of delivery, and a type of an application to which an interface to be displayed by the display device belongs.

For example, the means of delivery may include the means of delivery in the foregoing embodiments, and the display device may include the display device in the foregoing embodiments.

For example, for a method for determining the display frame rate of the display device based on any one of the operating state of the means of delivery, the location of the user in the cabin of the means of delivery, the touchscreen operation on the display device of the means of delivery, and the type of the application to which the interface to be displayed by the display device belongs, refer to the descriptions in the method 400, the method 600, the method 800, and the method 1000. Details are not described herein again.

In some possible implementations, the display frame rate of the display device may be determined based on at least two of the operating state of the means of delivery, the location of the user in the cabin of the means of delivery, the touchscreen operation on the display device of the means of delivery, and the type of the application to which the interface to be displayed by the display device belongs.

In an example, the display frame rate of the display device may be determined based on the operating state of the means of delivery and the location of the user in the cabin of the means of delivery.

As shown in Table 5, if the means of delivery is in the traveling state and there is a user only in a driver area, at least one of an instrument screen, an AR-HUD, and a central display that correspond to the driver area may be controlled to perform displaying at a high display frame rate (for example, 60 fps). Alternatively, if the means of delivery is in the traveling state and there is a user only in the driver area, an instrument screen and/or an AR-HUD that are/is in a display device corresponding to the driver area and that are/is configured to display operating condition information and navigation information may be controlled to perform displaying at a high display frame rate (for example, 60 fps), and a central display in the display device corresponding to the driver area is controlled to perform displaying at a low display frame rate (for example, 30 fps).

If the means of delivery is in the traveling state and there is one user in each of the driver area and a front passenger area, at least one of the instrument screen, the AR-HUD, and the central display that correspond to the driver area may be controlled to perform displaying at a high display frame rate (for example, 60 fps), and a front passenger entertainment screen corresponding to the front passenger area is controlled to perform displaying at a low display frame rate (for example, 30 fps).

If the means of delivery is in the traveling state and there is one user in each of the driver area, the front passenger area, and a rear-row area, the at least one of the instrument screen, the AR-HUD, and the central display that correspond to the driver area may be controlled to perform displaying at a high display frame rate (for example, 60 fps), the front passenger entertainment screen corresponding to the front passenger area is controlled to perform displaying at a low display frame rate (for example, 30 fps), and a rear-row screen corresponding to the rear-row area is controlled to perform displaying at a low display frame rate (for example, 30 fps).

If the means of delivery is in the parking state and there is one user in each of the driver seat, the front passenger seat, and a rear-row of the cabin, the instrument screen and/or the AR-HUD that are/is in the display device corresponding to the driver area and that are/is configured to display the operating condition information and the navigation information may be controlled to perform displaying at a low display frame rate (for example, 30 fps), the central display in the display device corresponding to the driver area to perform displaying at a high display frame rate (for example, 60 fps), the front passenger entertainment screen corresponding to the front passenger area to perform displaying at a high display frame rate (for example, 60 fps), and the rear-row screen corresponding to the rear-row area to perform displaying at a high display frame rate (for example, 60 fps).

**Table 5**

| Operating state of a means of delivery | Quantity of users and location of a user in a cabin | Display device and display frame rate |
|---|---|---|
| Traveling state | 1 person (driver) | Instrument screen (display 205): 60 fps |
| | | AR-HUD: 60 fps |
| | | Central display (display 201): 60 fps |
| | | Front passenger entertainment screen (display 202): off |
| | | Rear-row screen (display 203 or 204): off |
| Traveling state | 1 person (driver) | Instrument screen (display 205): 60 fps |
| | | AR-HUD: 60 fps |
| | | Central display (display 201): 30 fps |
| | | Front passenger entertainment screen (display 202): off |
| | | Rear-row screen (display 203 or 204): off |
| Traveling state | 2 persons (driver+front passenger) | Instrument screen (display 205): 60 fps |
| | | AR-HUD: 60 fps |
| | | Central display (display 201): 60 fps |
| | | Front passenger entertainment screen (display 202): 30 fps |
| | | Rear-row screen (display 203 or 204): off |
| Traveling state | 3 persons (driver+front passenger+person at a rear-row seat) | Instrument screen (display 205): 60 fps |
| | | AR-HUD: 60 fps |
| | | Central display (display 201): 60 fps |
| | | Front passenger entertainment screen (display 202): 30 fps |
| | | Rear-row screen (display 203 or 204): 30 fps |
| Parking state | 3 persons (driver+front passenger+person at a rear-row seat) | Instrument screen (display 205): 30 fps |
| | | AR-HUD: 30 fps |
| | | Central display (display 201): 60 fps |
| | | Front passenger entertainment screen (display 202): 60 fps |
| | | Rear-row screen (display 203 or 204): 60 fps |

In some possible implementations, after the display frame rate of the display device is determined based on the operating state of the means of delivery and the location of the user in the means of delivery, when a touchscreen operation on a display device is detected, the display frame rate of the display device may be adjusted based on the touchscreen operation. For example, with reference to Table 5, when the means of delivery is in the traveling state and there is one user in each of the driver area and the front passenger area, after it is determined that display frame rates of the instrument screen, the AR-HUD, and the central display that correspond to the driver area are 60 fps, and that a display frame rate of the front passenger entertainment screen that corresponds to the front passenger area is 30 fps, the display frame rate of the front passenger entertainment screen may be increased to 60 fps when a touchscreen operation on the front passenger entertainment screen is detected.

In another example, the display frame rate of the display device may be determined based on the operating state of the means of delivery and the type of the application to which the interface to be displayed by the display device belongs.

As shown in Table 6, when the means of delivery is in the traveling state, the instrument screen displays at a high display frame rate (for example, 60 fps), and the central display displays an entertainment-type application (for example, an audio application, a video application, or a game application), the central display may be controlled to display an interface of the application at a low display frame rate (for example, 30 fps). In addition, regardless of an interface displayed on a display other than the central display and the instrument screen, the display is controlled to perform displaying at a low display frame rate (for example, 30 fps).

When the means of delivery is in the traveling state, the instrument screen displays at a high display frame rate (for example, 60 fps), and the central display displays a driving-type application (for example, a navigation application or a driving assistance application), the central display may be controlled to display an interface of the application at a high display frame rate (for example, 60 fps). In addition, regardless of an interface displayed on a display other than the central display and the instrument screen, the display is controlled to perform displaying at a low display frame rate (for example, 30 fps).

When the means of delivery is in the parking state, the instrument screen displays at a low display frame rate (for example, 30 fps), and the central display displays the entertainment-type application, the central display may be controlled to display the interface of the application at a high display frame rate (for example, 60 fps). In addition, regardless of a type of application displayed on a display other than the central display and the instrument screen, the display is controlled to perform displaying at a high display frame rate (for example, 60 fps).

When the means of delivery is in the parking state, the instrument screen displays at a low display frame rate (for example, 30 fps), and the central display displays the driving-type application, the central display may be controlled to display an interface of the application at a low display frame rate (for example, 30 fps). In addition, regardless of an interface displayed on a display other than the central display and the instrument screen, the display is controlled to perform displaying at a high display frame rate (for example, 60 fps).

**Table 6**

| Operating state of a means of delivery | Application displayed by a display device | Display device and display frame rate |
|---|---|---|
| Traveling state | Entertainment-type application displayed by a central display | Instrument screen (display 205): 60 fps |
| | | Central display (display 201): 30 fps |
| | | Other displays (displays 202 to 204): 30 fps |
| Traveling state | Driving-type application displayed by a central display | Instrument screen (display 205): 60 fps |
| | | Central display (display 201): 60 fps |
| | | Other displays (displays 202 to 204): 30 fps |
| Parking state | Entertainment-type application displayed by a central display | Instrument screen (display 205): 30 fps |
| | | Central display (display 201): 60 fps |
| | | Other displays (displays 202 to 204): 60 fps |
| Parking state | Driving-type application displayed by a central display | Instrument screen (display 205): 30 fps |
| | | Central display (display 201): 30 fps |
| | | Other displays (displays 202 to 204): 60 fps |

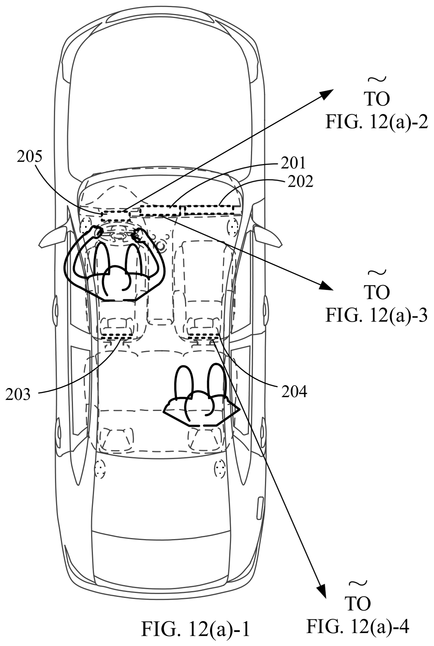

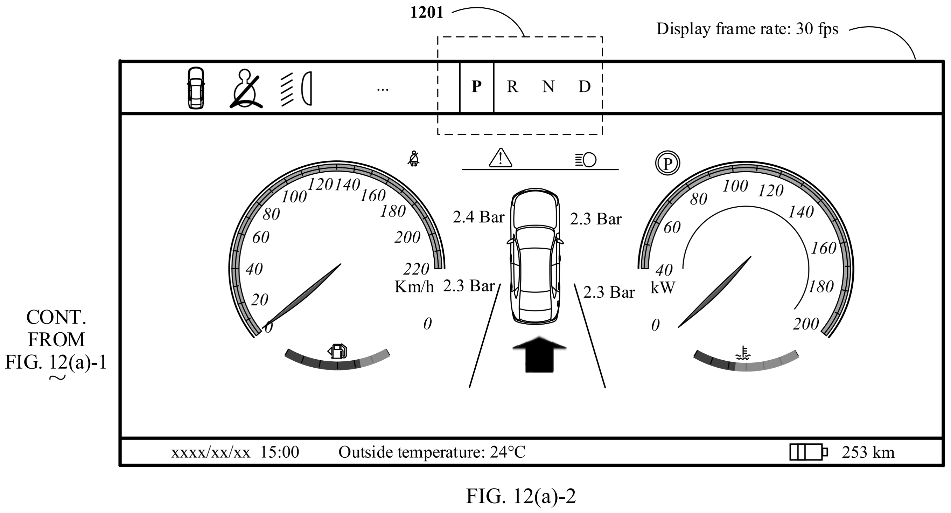

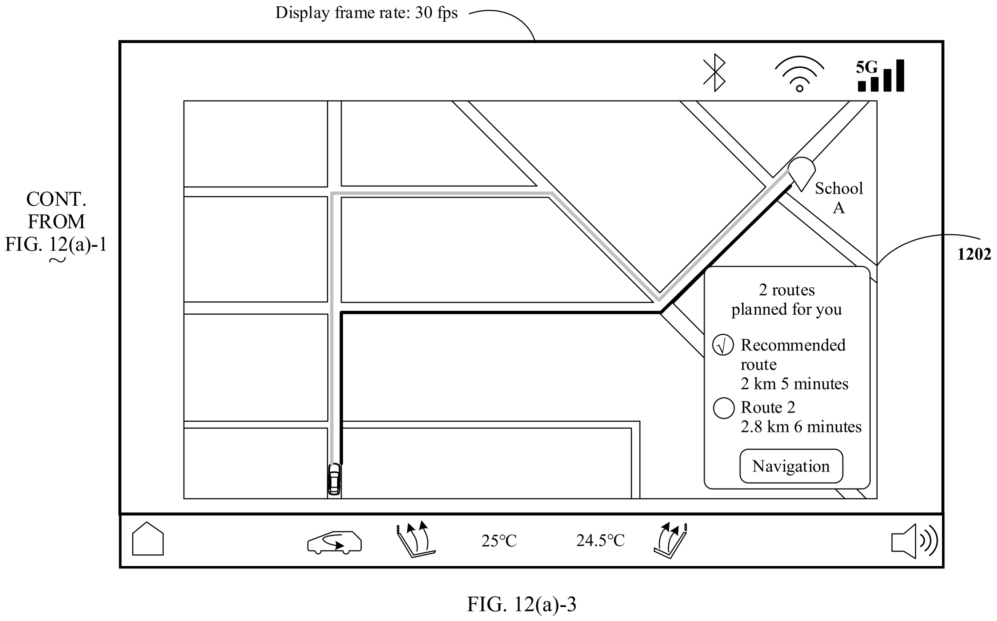

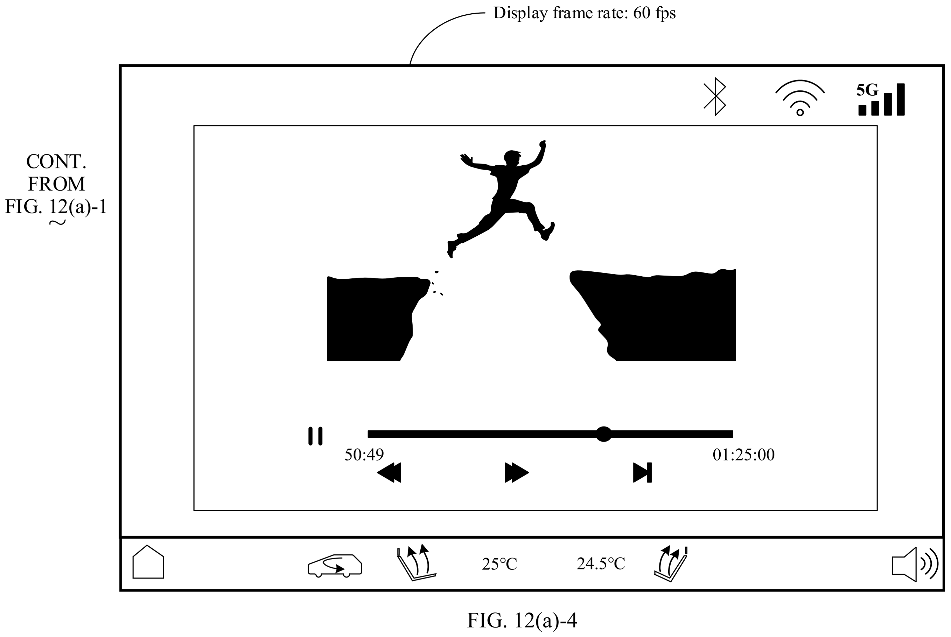

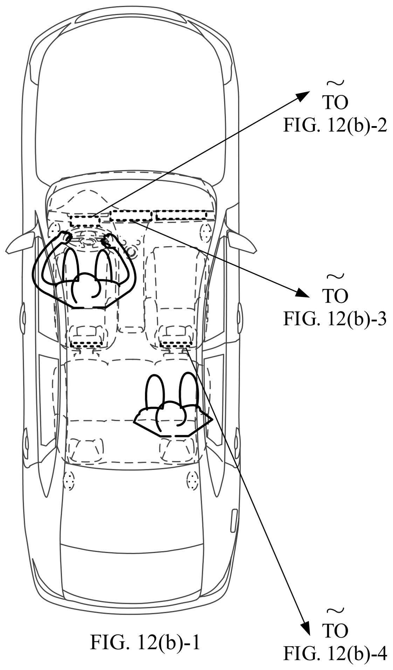

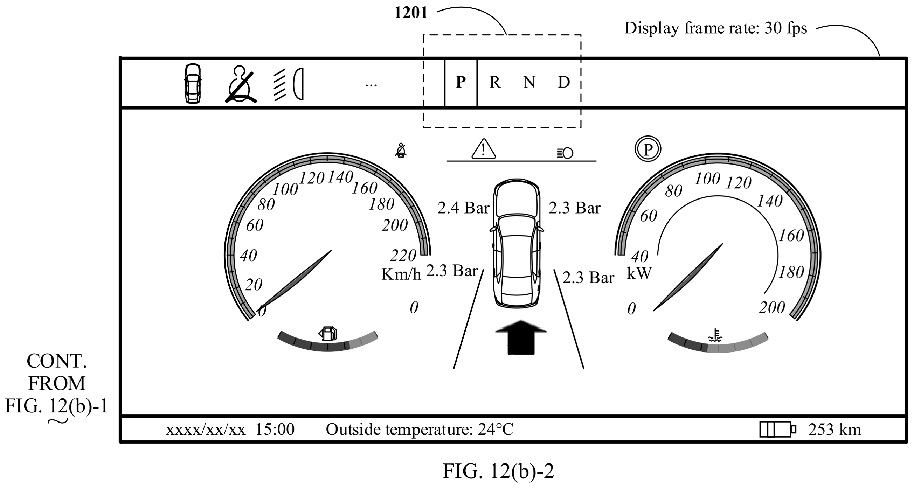

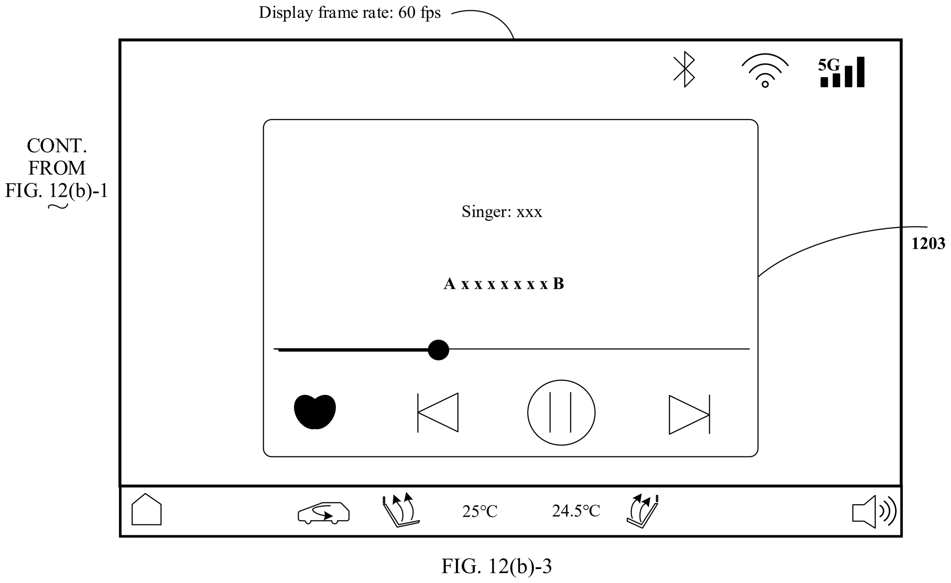

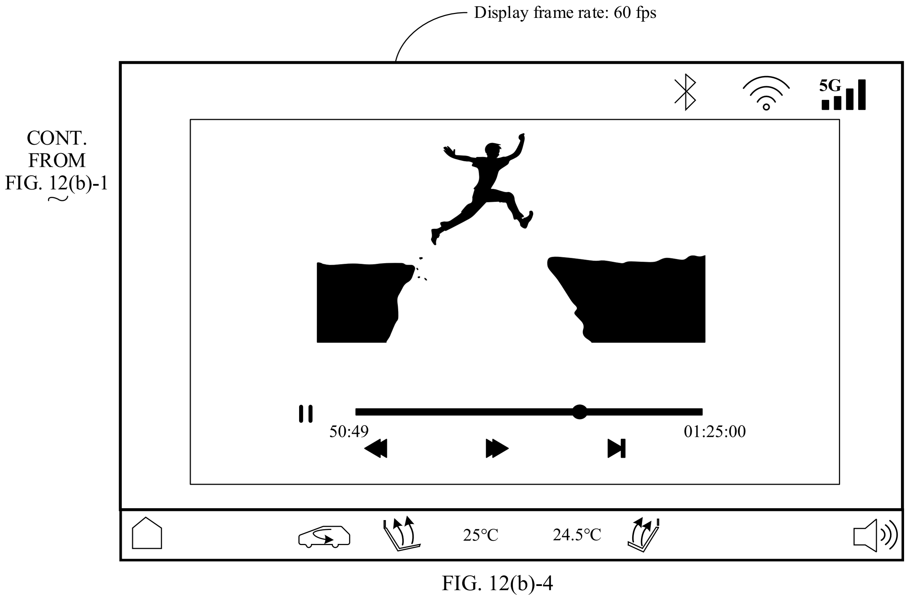

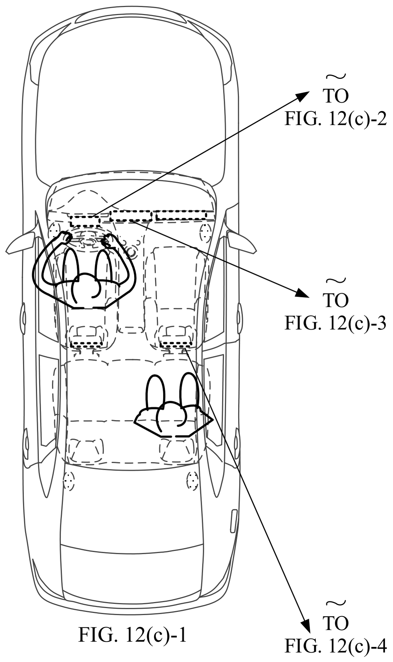

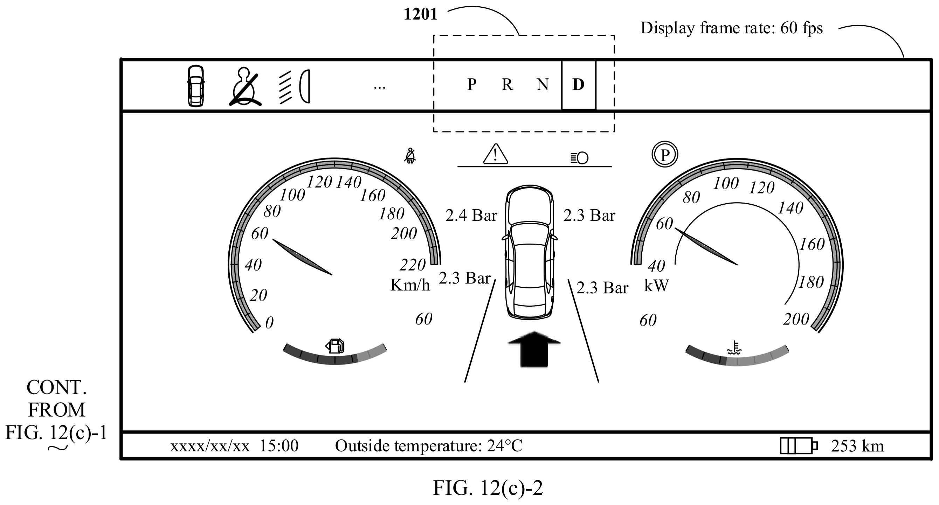

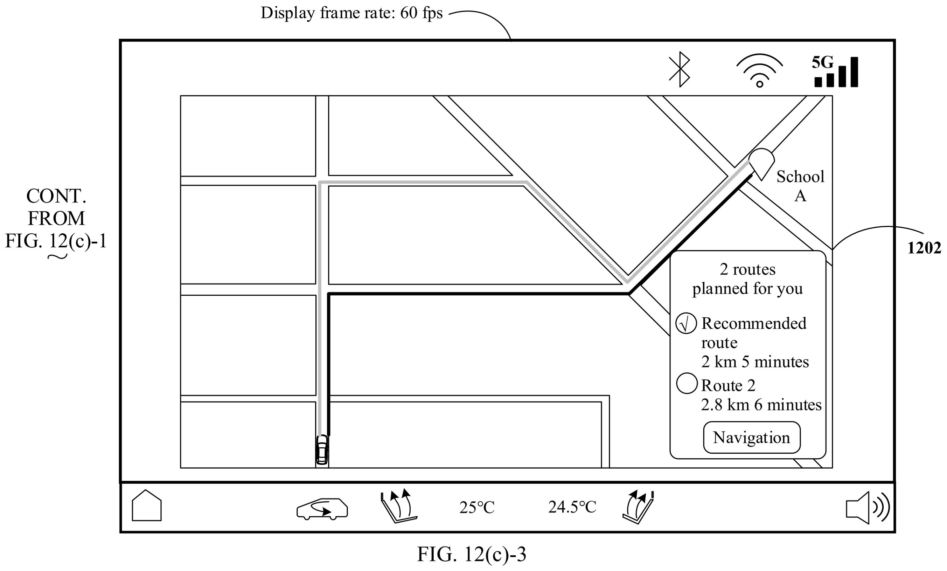

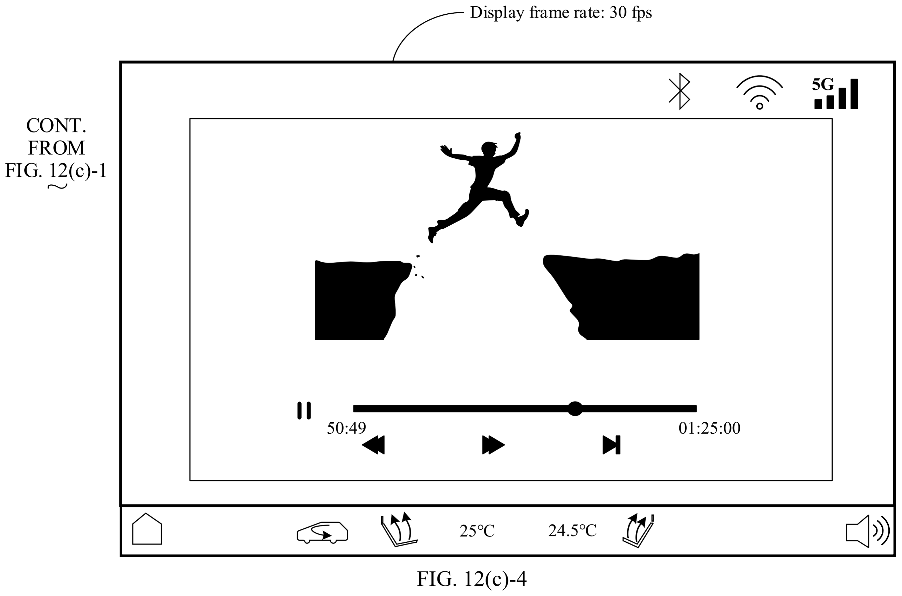

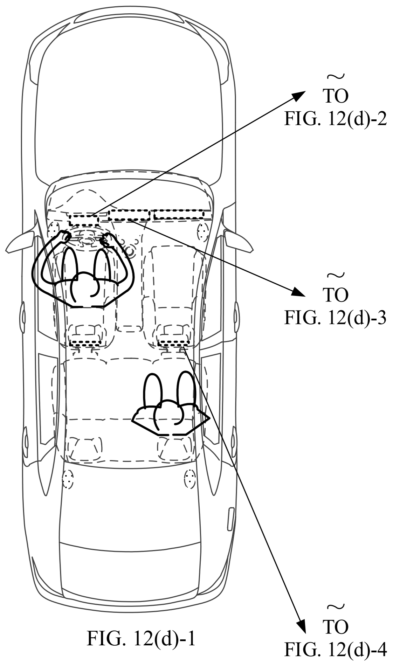

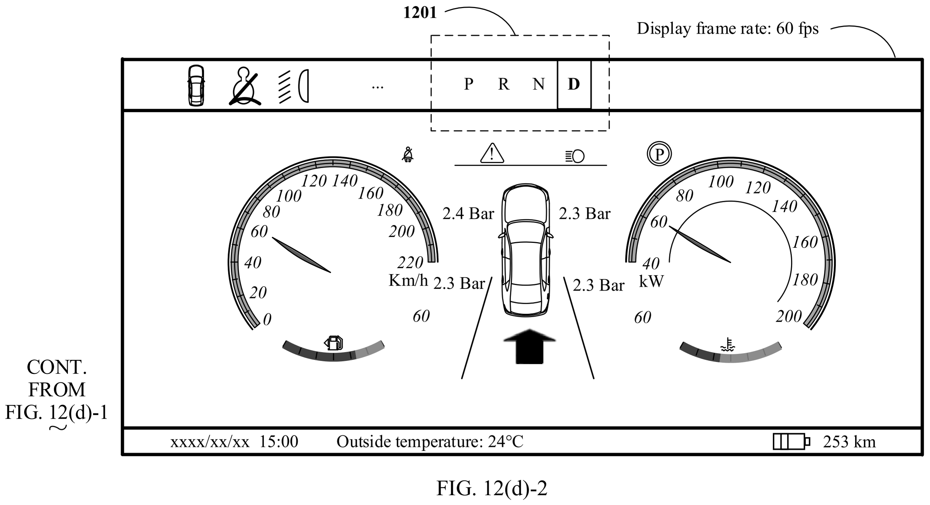

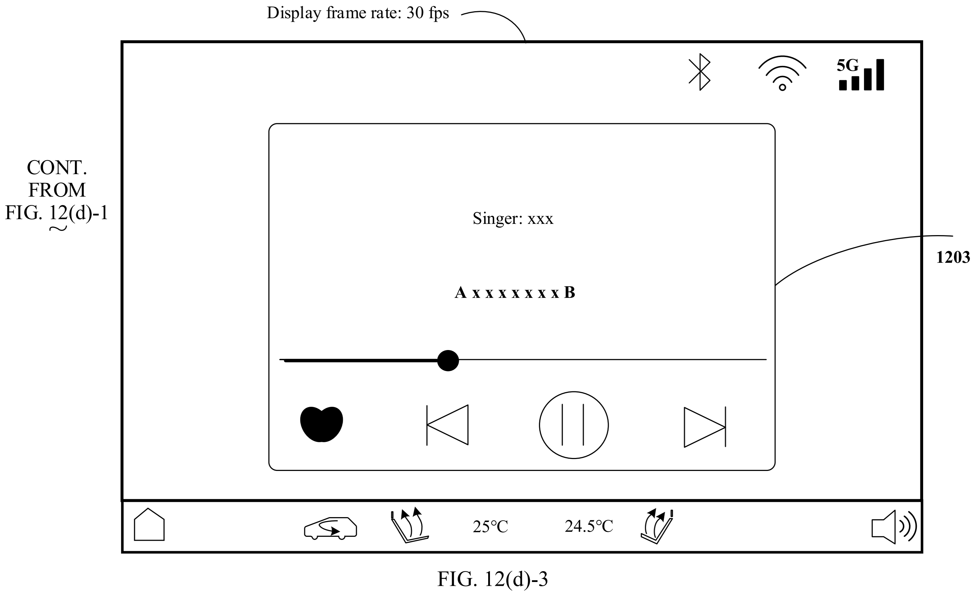

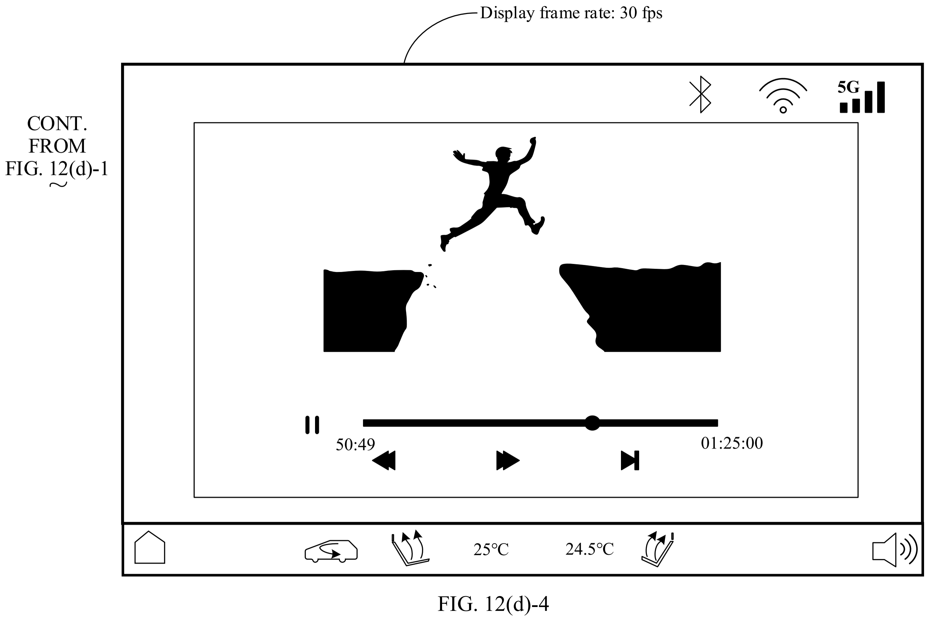

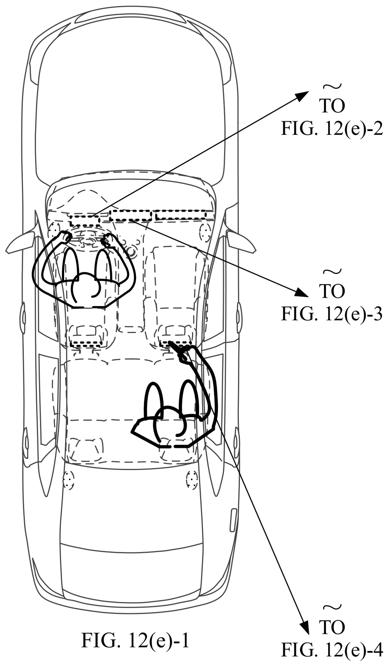

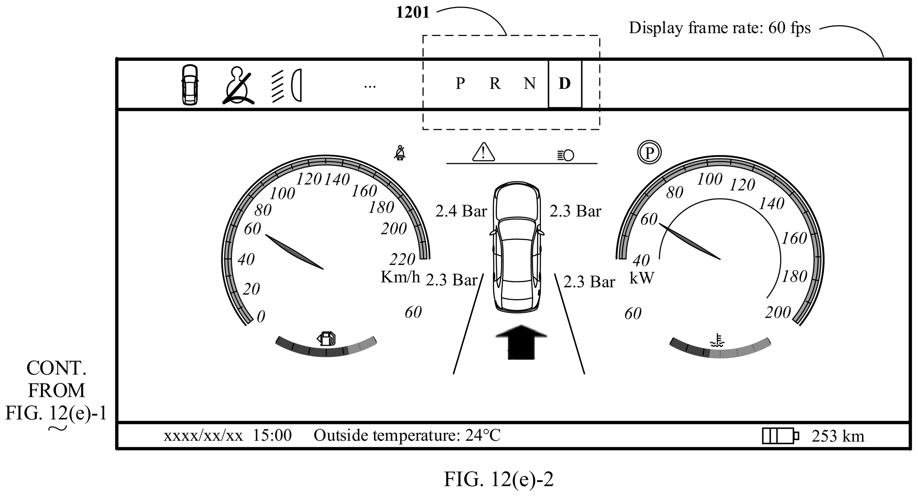

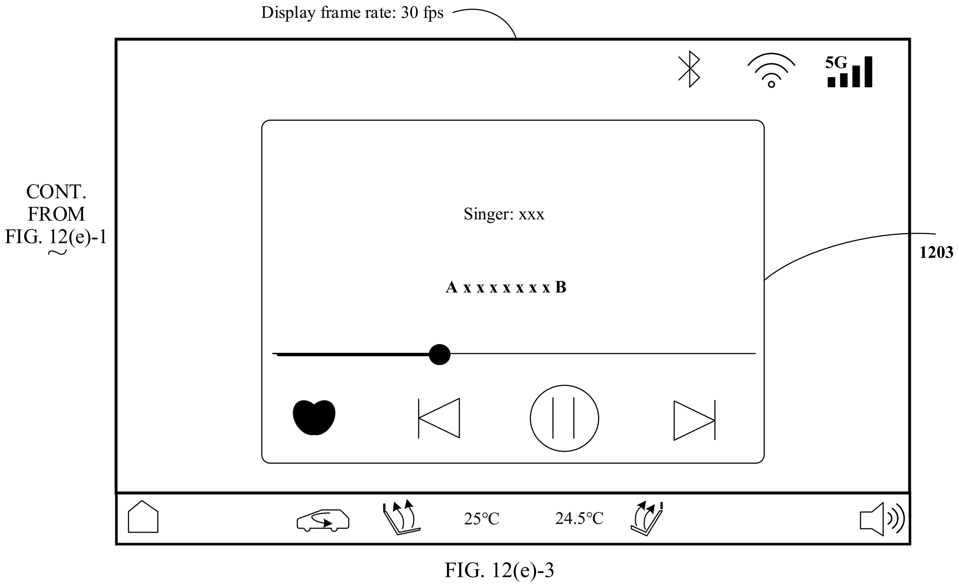

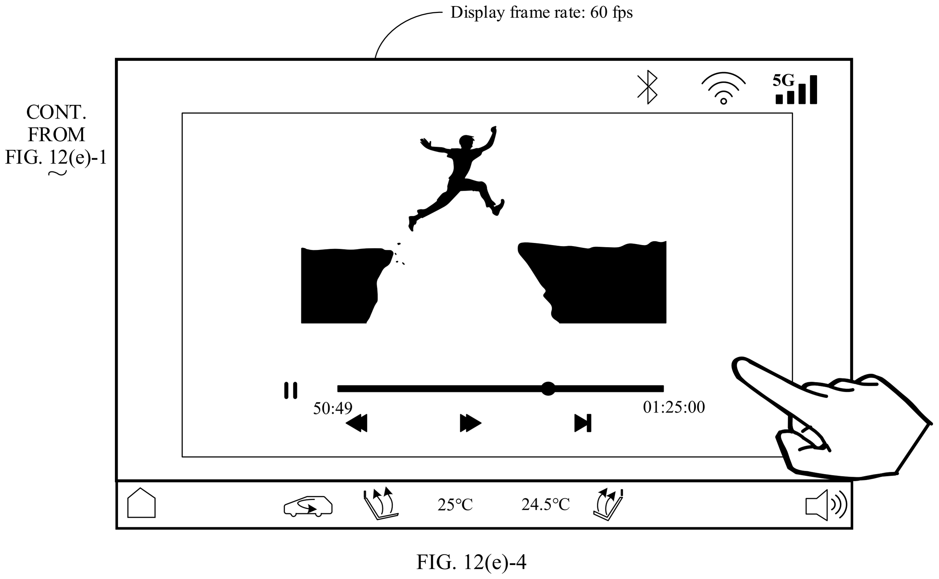

For example, the means of delivery is a five-seat vehicle, and an in-vehicle cabin includes the displays 201 to 205. As shown in FIG. 12(a)-1 to FIG. 12(e)-4, a display frame rate of the display in the cabin may be adjusted based on an operating state of the vehicle and a location of a user in the cabin.

As shown in FIG. 12(a)-1 to FIG. 12(a)-4, a gear bar 1201 displayed on the display 205 indicates that the vehicle is in a P gear, that is, the vehicle is currently in the parking state. When there is a user in a driver area and a right area in a rear row of the vehicle, display frame rates/a display frame rate of the display 201 and/or the display 205 corresponding to the driver area may be determined based on the operating state of the vehicle, and a display frame rate of the display 204 corresponding to the right area in the rear row may be determined based on the operating state of the vehicle. Further, the display frame rate of the display may be determined based on a type of an application to which a to-be-displayed interface of the display belongs. For example, when the to-be-displayed interface of the display 201 belongs to the driving-type application, for example, a navigation application 1202, it may be determined that the display frame rate of the display 201 is a low display frame rate, for example, 30 fps. When the to-be-displayed interface of the display 204 belongs to the entertainment-type application, for example, a video application, it may be determined that the display frame rate of the display 204 is a high display frame rate, for example, 60 fps.

As shown in FIG. 12(b)-1 to FIG. 12(b)-4, the gear bar 1201 displayed on the display 205 indicates that the vehicle is in a P gear, that is, the vehicle is currently in the parking state. When the to-be-displayed interface of the display 201 belongs to the entertainment-type application, for example, an audio application 1203, it may be determined that the display frame rate of the display 201 is a high display frame rate, for example, 60 fps. When the to-be-displayed interface of the display 204 belongs to the entertainment-type application, for example, a video application, it may be determined that the display frame rate of the display 204 is a high display frame rate, for example, 60 fps.

As shown in FIG. 12(c)-1 to FIG. 12(c)-4, the gear bar 1201 displayed on the display 205 indicates that the vehicle is in a D gear, that is, the vehicle is currently in the traveling state. When there is a user in a driver area and a right area in a rear row of the vehicle, display frame rates/a display frame rate of the display 201 and/or the display 205 corresponding to the driver area may be determined based on the operating state of the vehicle, and a display frame rate of the display 204 corresponding to the right area in the rear row may be determined based on the operating state of the vehicle. Further, the display frame rate of the display may be determined based on a type of an application to which a to-be-displayed interface of the display belongs. For example, when the to-be-displayed interface of the display 201 belongs to the driving-type application, for example, the navigation application 1202, it may be determined that the display frame rate of the display 201 is a high display frame rate, for example, 60 fps. When the to-be-displayed interface of the display 204 belongs to the entertainment-type application, for example, the video application, it may be determined that the display frame rate of the display 204 is a low display frame rate, for example, 30 fps.

As shown in FIG. 12(d)-1 to FIG. 12(d)-4, the gear bar 1201 displayed on the display 205 indicates that the vehicle is in a D gear, that is, the vehicle is currently in the traveling state. When the to-be-displayed interface of the display 201 belongs to the entertainment-type application, for example, the audio application 1203, it may be determined that the display frame rate of the display 201 is a low display frame rate, for example, 30 fps. When the to-be-displayed interface of the display 204 belongs to the entertainment-type application, for example, the video application, it may be determined that the display frame rate of the display 204 is a low display frame rate, for example, 30 fps.

In some possible implementations, after a display frame rate of the display device is determined based on the operating state of the means of delivery, the location of the user in the means of delivery, and the type of the application to which the to-be-displayed interface of the display device belongs, when a touchscreen operation on a display device is detected, the display frame rate of the display device may be adjusted based on the touchscreen operation.

For example, with reference to FIG. 12(d)-1 to FIG. 12(d)-4, the means of delivery is still a vehicle. After the vehicle is in the traveling state, it is determined that the display frame rates of the display 201 and the display 204 are both 30 fps. As shown in FIG. 12(e)-1 to FIG. 12(e)-4, if a touchscreen operation on the display 204 is detected, the display frame rate of the display 204 may be increased to 60 fps.

In some possible implementations, the method further includes: determining the display frame rate based on resource occupation information, where the resource occupation information indicates a used resource capacity and/or an available resource capacity in a remaining resource of a computing unit, and the computing unit is associated with the display device.

For example, when the resource occupation information indicates that the used resource capacity is greater than or equal to a preset capacity threshold, and a first state indicates that the means of delivery is in the traveling state, display frame rates of one or more display devices are controlled to be decreased. The one or more display devices are configured to perform displaying at least one of entertainment information and navigation information.

For example, as shown in Table 7, the computing unit is a CPU and the preset capacity threshold is 70%. When a used resource capacity of the CPU is greater than or equal to 70%, the display frame rates of the one or more display devices in a central display, a front passenger entertainment screen, and an AR-HUD may be controlled to be decreased.

In some possible implementations, when the means of delivery is in the traveling state, the central display displays a 360-degree surround view image and/or a reversing image, and the resource occupation information indicates that the used resource capacity is greater than or equal to the preset capacity threshold, display frame rates of one or more display devices other than the central display may be controlled to be decreased, for example, display frame rates/a display frame rate of the instrument screen and/or the AR-HUD may be controlled to be decreased.

In some possible implementations, when the resource occupation information indicates that the used resource capacity is greater than or equal to the preset capacity threshold, and the means of delivery is in the parking state, the display frame rates of the one or more display devices are controlled to be decreased. For example, as shown in Table 7, when the used resource capacity of the CPU is less than 70%, the central display and the front passenger entertainment screen are controlled to perform displaying at a display frame rate of 60 fps. When the used resource capacity of the CPU is greater than or equal to 70%, display frame rates of the central display and the front passenger entertainment screen are decreased to 45 fps.

**Table 7**

| Operating state of a means of delivery | Used resource capacity of a CPU | Display device and display frame rate |
|---|---|---|
| Traveling state | 30% | Instrument screen (display 205): 60 fps |
| | | AR-HUD: 60 fps |
| | | Central display (display 201): 60 fps |
| Traveling state | 85% | Instrument screen (display 205): 60 fps |
| | | AR-HUD: 45 fps |
| | | Central display (display 201): 45 fps |
| Traveling state | 30% | Instrument screen (display 205): 60 fps |
| | | AR-HUD: 60 fps |
| | | Central display (display 201): 60 fps |
| | | Front passenger entertainment screen (display 202): 30 fps |
| Traveling state | 85% | Instrument screen (display 205): 60 fps |
| | | AR-HUD: 30 fps |
| | | Central display (display 201): 30 fps |
| | | Front passenger entertainment screen (display 202): 30 fps |
| Traveling state | 30% | Instrument screen (display 205): 60 fps |
| | | AR-HUD: 60 fps |
| | | Central display (display 201): 60 fps |
| | | Front passenger entertainment screen (display 202): 45 fps |
| Traveling state | 85% | Instrument screen (display 205): 30 fps |
| | | AR-HUD: 30 fps |
| | | Central display (display 201): 60 fps |
| | | Front passenger entertainment screen (display 202): 30 fps |
| Parking state | 30% | Instrument screen (display 205): 30 fps |
| | | Central display (display 201): 60 fps |
| | | Front passenger entertainment screen (display 202): 60 fps |
| Parking state | 85% | Instrument screen (display 205): 30 fps |
| | | Central display (display 201): 45 fps |
| | | Front passenger entertainment screen (display 202): 45 fps |

In some possible implementations, after the resource occupation information indicates that the used resource capacity is greater than or equal to the preset capacity threshold, and the display frame rates of the one or more display devices are controlled to be decreased based on the resource occupation information, a display frame rate of a display device is controlled to be increased when a touchscreen signal for the display device of the one or more display devices is detected.

For example, with reference to Table 7, when the means of delivery is in the traveling state and the used resource capacity of the CPU is 85%, display frame rates of the AR-HUD and the central display are controlled to be decreased to 30 fps. Further, when a touchscreen signal for the central display is detected, the display frame rate of the central display is controlled to be increased to 60 fps. In some possible implementations, in the foregoing scenario, when a touchscreen signal for the front passenger entertainment screen is detected, the touchscreen signal of the front passenger entertainment screen may also be controlled to be increased to 60 fps.

In some possible implementations, after the resource occupation information indicates that the used resource capacity is greater than or equal to the preset capacity threshold, and the display frame rates of the one or more display devices are controlled to be decreased based on the resource occupation information, a display frame rate of a display device is controlled to be increased when a touchscreen signal for the display device of the one or more display devices is detected, and a display frame rate of a display device other than the display device of the one or more display devices is controlled to be further decreased.

For example, with reference to Table 7, when the means of delivery is in the traveling state and the used resource capacity of the CPU is 85%, display frame rates of the AR-HUD and the central display are controlled to be decreased to 45 fps. Further, when the touchscreen signal for the central display is detected, the display frame rate of the central display is controlled to be increased to 60 fps, and the display frame rate of the AR-HUD is controlled to be further decreased to 30 fps.

In some possible implementations, when the used resource capacity is greater than or equal to the preset capacity threshold, that a display frame rate of a specific display device is preferentially ensured is set by a user. For example, if the user sets that the display frame rate of the central display is preferentially ensured, when the used resource capacity is greater than or equal to the preset capacity threshold, a display frame rate of a display device other than the central display is controlled to be decreased based on user setting.

In some possible implementations, when single-frame processing duration in first preset duration is greater than or equal to preset processing duration, the display frame rates of the one or more display devices are controlled to be decreased, where the one or more display devices are configured to display entertainment information and/or navigation information.

It should be noted that the single-frame processing duration may be duration required for synthesizing one frame of data for display by the display device. For example, the single-frame processing duration may be duration required for synthesizing and rendering one frame of image by the surface flinger. Generally, the preset processing duration is a reciprocal of a display frame rate of the display device. For example, if the display frame rate is 60 fps, the preset processing duration is 16.7 milliseconds. When the single-frame processing duration is greater than 16.7 milliseconds, a frame loss occurs.

For example, the first preset duration may be 1 second, or may be 1.5 seconds, or may be other duration. The preset processing duration may be 16.7 milliseconds, or may be other preset processing duration. For example, when the single-frame processing duration is greater than or equal to 16.7 milliseconds one consecutive second, it indicates that a processing capability of a computing platform is insufficient to support the display device in displaying at 60 fps. In this case, a display frame rate of the display device is controlled to be decreased. For example, the one or more display devices may include at least one of a central display, a front passenger entertainment screen, a rear screen of a driver's headrest, and a rear screen of a front passenger's headrest.

1120: Control the display device to perform displaying at the display frame rate.

For example, the controlling the display device to perform displaying at the display frame rate may include: controlling the surface flinger to control, based on the display frame rate, composition of data used by the display device for display.

According to the control method provided in this embodiment of this application, the display frame rate of the display device may be dynamically adjusted based on at least one of the operating state of the means of delivery, the location of the user in the cabin of the means of delivery, the touchscreen operation on the display device of the means of delivery, and the type of the application to which the interface to be displayed by the display device belongs, so that a picture of the display device can be smoothly displayed. This improves user experience. The frame rate of the display device may be further adjusted based on the used resource capacity of the computing unit. When the used resource capacity of the computing unit is excessively high, a display frame rate of an opened display device is controlled to be decreased. This helps prevent frame freezing of the display device caused by the excessively high used resource capacity of the computing unit. When the used resource capacity of the computing unit is small, the display device is controlled to perform displaying at a high display frame rate, to improve image smoothness, and further improve user experience.

It should be noted that a correspondence between a status of a means of delivery and a display frame rate of a display device shown in Table 1 to Table 7 is merely an example for description. In specific implementation, the correspondence may alternatively be in another form. In addition, the display frame rate shown in Table 1 to Table 7 may alternatively be another value. For example, a specific value of the display frame rate may be set by the user. This is not specifically limited in embodiments of this application.

The following uses an example to describe a method for determining, by the means of delivery, whether there is a user in a cabin and a location of the user in the cabin.

For example, detecting, by using a sound wave sensor, whether a user is in position in a seat may be specifically: The means of delivery may determine, based on audio information obtained by the sound wave sensor, whether there is a user in the cabin and an actual location of the user. The audio information may be audio information obtained after various types of invalid audio information are excluded from collected audio information inside the means of delivery, and the invalid audio information may be audio information in which a volume is excessively low. A sound source location may be a location of a sound source corresponding to audio information, and the sound source location may be a location relative to a display device based on sound source positioning, or may be specific location coordinates. This is not specifically limited in this embodiment of this application.

For example, the sound source location may be determined based on a time difference of arrival (time difference of arrival, TDOA) principle and audio information collected by a plurality of sound wave sensors. For example, sound wave sensors A and B each detect that an audio is sent from a sound source S, and if time when a sound source signal of the sound source S arrives at the sound wave sensor A is t1, and time when the sound source signal of the sound source S arrives at the sound wave sensor B is t2, a time difference dt=|t1-t2|. If a distance between the sound source S and the sound wave sensor A is set to AS, a distance between the sound source S and the sound wave sensor B is set to BS, and a sound speed is c, dt=t1-t2=AS/c-BS/c may be obtained. Then, based on a distance a between the two sound wave sensors, one of the sensors is selected as a reference point, and a location of the sound source may be determined.

In some possible implementations, the audio information may be a voice including a specific wake-up word, for example, "turn on a smart screen." The sound wave sensor may be an ultrasonic wave transceiver apparatus integrated into or installed on a display device, or an ultrasonic wave transceiver apparatus (including but not limited to a microphone sensor or a microphone sensor array) installed inside a cabin of a means of delivery.

For example, detecting, by using a camera apparatus or an in-cabin visual sensor, whether a user is in position in a seat may be specifically: obtaining face information of the user by using the camera apparatus or the in-vehicle visual sensor, to determine, based on the face information of the user, whether there is a user in the cabin and an actual location of the user. The camera apparatus or the in-cabin vision sensor includes but is not limited to a camera lens sensor integrated into or installed on a display device or a camera lens sensor installed inside a vehicle cabin, for example, a red green blue (red green blue, RGB) camera, a red green blue-infrared (red green blue-infrared radiation, RGB-IR) camera, and a time of flight (time of flight, TOF) camera.

In some possible implementations, after the face information of the user is obtained, a gender, an age, and the like of the user may be determined by using an algorithm like a facial attribute recognition algorithm or a facial gender classification algorithm. For example, after the face information of the user is obtained, it may be further determined, by using a gaze estimation (gaze estimation) algorithm, a gaze tracking algorithm, or the like, whether a gaze focus of the user is on the display device, to control content displayed on the display device.

In some possible implementations, a lidar integrated into or installed on the display device or a lidar installed in the vehicle cabin, a radio transceiver apparatus (including but not limited to a millimeter wave radar or a centimeter wave radar) on the display device or at an edge of the display device, an infrared sensing apparatus (including but not limited to an infrared rangefinder and a laser rangefinder) integrated into the display device or at an edge of the display device, an eye tracker, or the like may be used to detect whether a user is in position in a seat.

For example, detecting, by using a pressure sensor disposed in a seat, whether a user is in position in the seat may be specifically: when pressure in the seat is greater than or equal to a preset threshold, determining that the user is in position in the seat. For example, the preset threshold may be 100 newtons (Newtons, N), 200 N, or another value. This is not specifically limited in embodiments of this application.

It should be understood that, when whether there is a user in the cabin and an actual location of the user is detected, any one of the foregoing methods may be used, or a combination of the foregoing methods may be used, or another method may be used. This is not specifically limited in embodiments of this application.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

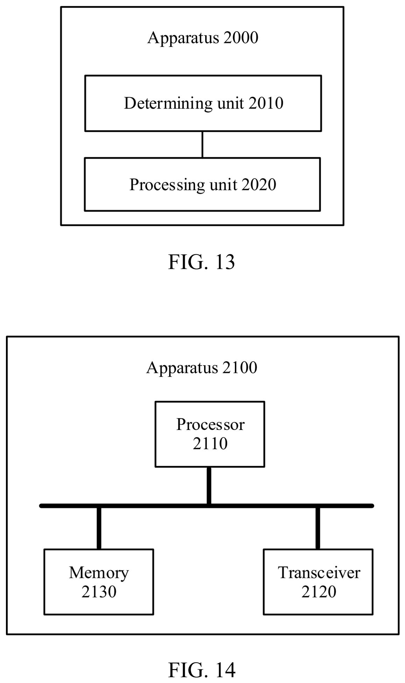

The foregoing describes in detail the methods provided in embodiments of this application with reference to FIG. 1 to FIG. 12(e)-4. The apparatus provided in embodiments of this application is described in detail below with reference to FIG. 13 and FIG. 14. It should be understood that descriptions of apparatus embodiments correspond to descriptions of method embodiments. Therefore, for content not described in detail, refer to the foregoing method embodiments. For brevity, details are not described herein again.

FIG. 13 is a block diagram of a control apparatus 2000 according to an embodiment of this application. The apparatus 2000 includes a determining unit 2010 and a processing unit 2020.

The apparatus 2000 may include a unit configured to perform the method in FIG. 4, FIG. 6, FIG. 8, FIG. 10, or FIG. 11. In addition, units in the apparatus 2000 are separately used to implement a corresponding procedure in the method embodiment in FIG. 4, FIG. 6, FIG. 8, FIG. 10, or FIG. 11.

When the apparatus 2000 is configured to perform the method 1100 in FIG. 11, the determining unit 2010 may be configured to perform S1110 in the method 1100, and the processing unit 2020 may be configured to perform S1120 in the method 1100.

Specifically, the determining unit 2010 is configured to: determine a display frame rate of a display device based on at least one of an operating state of a means of delivery, a location of a user in a cabin of the means of delivery, a touchscreen operation on the display device of the means of delivery, and a type of an application to which an interface to be displayed by the display device belongs. The processing unit 2020 is configured to control the display device to perform displaying at the display frame rate.

Optionally, the apparatus further includes an adjustment unit, and the adjustment unit is configured to: adjust the display frame rate based on a change of at least one of the operating state, the location of the user in the cabin of the means of delivery, the touchscreen operation on the display device of the means of delivery, and the type of the application to which the interface to be displayed by the display device belongs.

Optionally, the change of the operating state includes a transition between a traveling state and a parking state, or a change of an autonomous driving level.

Optionally, the display device is configured to perform displaying at least one of operating condition information and navigation information of the means of delivery, and the adjustment unit is configured to: increase the display frame rate in response to a change of the operating state from the parking state to the traveling state; decrease the display frame rate in response to a change of the operating state from the traveling state to the parking state; increase the display frame rate in response to a decrease in the autonomous driving level of the means of delivery; or decrease the display frame rate in response to an increase in the autonomous driving level of the means of delivery.

Optionally, the display device is configured to display entertainment information, and the adjustment unit is configured to: decrease the display frame rate in response to the change of the operating state from the parking state to the traveling state; increase the display frame rate in response to the change of the operating state from the traveling state to the parking state; decrease the display frame rate in response to the decrease in the autonomous driving level of the means of delivery; or increase the display frame rate in response to the increase in the autonomous driving level of the means of delivery.

Optionally, the adjustment unit is configured to: increase the display frame rate in response to the user arriving at a location that is in the cabin and that corresponds to the display device; or decrease the display frame rate in response to the user leaving a location that is in the cabin and that corresponds to the display device.

Optionally, the adjustment unit is configured to: decrease the display frame rate in response to no touchscreen operation occurring within predetermined time after the touchscreen operation; or increase the display frame rate in response to the touchscreen operation, where no touchscreen operation occurs within predetermined time before the touchscreen operation.

Optionally, the display device includes a first display device and a second display device, where the first display device corresponds to a first area in the cabin, the second display device corresponds to a second area in the cabin, and the determining unit 2010 is configured to determine that a display frame rate of the first display device is different from a display frame rate of the second display device.

Optionally, the determining unit 2010 is configured to: in response to there being no user in the first area and there being a user in the second area, determine that the display frame rate of the first display device is lower than the display frame rate of the second display device; in response to there being a user in the first area and there being no user in the second area, determine that the display frame rate of the first display device is higher than the display frame rate of the second display device; or in response to there being a user in the first area and a user in the second area, determine that the display frame rate of the first display device is higher than the display frame rate of the second display device, where the first area is a driver area of the cabin, and the second area includes one or more areas other than the driver area.

Optionally, the determining unit 2010 is configured to: in response to a user touchscreen operation on the first display device within preset time and no user touchscreen operation on the second display device within the preset time, determine that the display frame rate of the first display device is higher than the display frame rate of the second display device; or in response to no user touchscreen operation on the first display device within preset time and a user touchscreen operation on the second display device within the preset time, determine that the display frame rate of the first display device is lower than the display frame rate of the second display device.

Optionally, the determining unit 2010 is configured to: in response to a priority of a first application to which an interface to be displayed by the first display device belongs being higher than a priority of a second application to which an interface to be displayed by the second display device belongs, determine that the display frame rate of the first display device is higher than the display frame rate of the second display device; or in response to a priority of a first application to which an interface to be displayed by the first display device belongs being lower than a priority of a second application to which an interface to be displayed by the second display device belongs, determine that the display frame rate of the first display device is lower than the display frame rate of the second display device.

Optionally, the determining unit 2010 is configured to determine the display frame rate based on resource occupation information, where the resource occupation information indicates a used resource capacity and/or an available resource capacity in a remaining resource of a computing unit, and the computing unit is associated with the display device.

Optionally, the display device includes a third display device, the third display device is configured to perform displaying at least one of entertainment information and navigation information, and the determining unit 2010 is configured to: when the means of delivery is in the traveling state and the resource occupation information indicates that the used resource capacity is greater than or equal to a preset capacity threshold, determine that the display frame rate is a first frame rate; and when the means of delivery is in the traveling state and the resource occupation information indicates that the used resource capacity is less than the preset capacity threshold, determine that the display frame rate is a second frame rate, where the first frame rate is higher than the second frame rate.

Optionally, the third display device includes one or more display devices other than an instrument screen.

Optionally, the determining unit 2010 is configured to: when the means of delivery is in the traveling state, and single-frame processing duration in first preset duration is greater than or equal to preset processing duration, determine to decrease the display frame rate of the display device.

For example, the determining unit 2010 and the processing unit 2020 may be disposed in the means of delivery 100 shown in FIG. 1. More specifically, the determining unit 2010 and the processing unit 2020 may be disposed in the computing platform 150 shown in FIG. 1. Alternatively, the determining unit 2010 and the processing unit 2020 may be disposed in the MDWM shown in FIG. 3.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

In a specific implementation process, operations performed by the determining unit 2010 and the processing unit 2020 may be performed by one processor, or may be performed by different processors. In a specific implementation process, the one or more processors may be processors disposed on the computing platform 150 shown in FIG. 1. Alternatively, the apparatus 2000 may be a chip disposed on the computing platform 150.

FIG. 14 is a block diagram of a control apparatus according to an embodiment of this application. A control apparatus 2100 shown in FIG. 14 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, to implement the control methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read only memory (read only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the control methods in the foregoing embodiments.

In a specific implementation process, the apparatus 2100 may be disposed in the computing platform 150 shown in FIG. 1, or may be disposed in the MDWM shown in FIG. 3.

An embodiment of this application further provides a means of delivery. The means of delivery may include the apparatus 2000 or the apparatus 2100.

In some possible implementations, the transportation means is a vehicle.

An embodiment of this application further provides a computer program product. The computer program product includes computer program code. When the computer program code is run on a computer, the computer is enabled to implement the control methods in the foregoing embodiments of this application.

An embodiment of this application further provides a computer-readable storage medium. The computer-readable storage medium stores computer instructions. When the computer instructions are run on a computer, the computer is enabled to implement the control methods in embodiments of this application.

An embodiment of this application further provides a chip, including a circuit, configured to perform the control methods in the foregoing embodiments of this application.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in a processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A control method, comprising:
determining a display frame rate of a display device based on at least one of an operating state of a means of delivery, a location of a user in a cabin of the means of delivery, a touchscreen operation on the display device of the means of delivery, and a type of an application to which an interface to be displayed by the display device belongs; and
controlling the display device to perform displaying at the display frame rate.

2. The method according to claim 1, wherein the determining the display frame rate of the display device based on the at least one of the operating state of the means of delivery, the location of the user in the cabin of the means of delivery, the touchscreen operation on the display device of the means of delivery, and the type of the application to which the interface to be displayed by the display device belongs comprises:
adjusting the display frame rate based on a change of at least one of the operating state, the location of the user in the cabin of the means of delivery, the touchscreen operation on the display device of the means of delivery, and the type of the application to which the interface to be displayed by the display device belongs.

3. The method according to claim 2, wherein the change of the operating state comprises a transition between a traveling state and a parking state, or a change of an autonomous driving level.

4. The method according to claim 2 or 3, wherein the display device is configured to perform displaying at least one of operating condition information and navigation information of the means of delivery; and the adjusting the display frame rate based on the change of the at least one of the operating state, the location of the user in the cabin of the means of delivery, the touchscreen operation on the display device of the means of delivery, and the type of the application to which the interface to be displayed by the display device belongs comprises:
increasing the display frame rate in response to a change of the operating state from the parking state to the traveling state;
decreasing the display frame rate in response to a change of the operating state from the traveling state to the parking state;
increasing the display frame rate in response to a decrease in the autonomous driving level of the means of delivery; or
decreasing the display frame rate in response to an increase in the autonomous driving level of the means of delivery.

5. The method according to any one of claims 2 to 4, wherein the display device is configured to display entertainment information; and the adjusting the display frame rate based on the change of the at least one of the operating state, the location of the user in the cabin of the means of delivery, the touchscreen operation on the display device of the means of delivery, and the type of the application to which the interface to be displayed by the display device belongs comprises:
decreasing the display frame rate in response to the change of the operating state from the parking state to the traveling state;
increasing the display frame rate in response to the change of the operating state from the traveling state to the parking state;
decreasing the display frame rate in response to the decrease in the autonomous driving level of the means of delivery; or
increasing the display frame rate in response to the increase in the autonomous driving level of the means of delivery.

6. The method according to any one of claims 2 to 5, wherein the adjusting the display frame rate based on the change of the at least one of the operating state, the location of the user in the cabin of the means of delivery, the touchscreen operation on the display device of the means of delivery, and the type of the application to which the interface to be displayed by the display device belongs comprises:
increasing the display frame rate in response to the user arriving at a location that is in the cabin and that corresponds to the display device; or decreasing the display frame rate in response to the user leaving a location that is in the cabin and that corresponds to the display device.

7. The method according to any one of claims 2 to 6, wherein the adjusting the display frame rate based on the change of the at least one of the operating state, the location of the user in the cabin of the means of delivery, the touchscreen operation on the display device of the means of delivery, and the type of the application to which the interface to be displayed by the display device belongs comprises:
decreasing the display frame rate in response to no touchscreen operation occurring within predetermined time after the touchscreen operation; or
increasing the display frame rate in response to the touchscreen operation, wherein no touchscreen operation occurs within predetermined time before the touchscreen operation.

8. The method according to any one of claims 1 to 7, wherein the display device comprises a first display device and a second display device, the first display device corresponds to a first area in the cabin, and the second display device corresponds to a second area in the cabin; and the determining the display frame rate of the display device comprises:
determining that a display frame rate of the first display device is different from a display frame rate of the second display device.

9. The method according to claim 8, wherein the determining that the display frame rate of the first display device is different from the display frame rate of the second display device comprises:
in response to there being no user in the first area and there being a user in the second area, determining that the display frame rate of the first display device is lower than the display frame rate of the second display device;
in response to there being a user in the first area and there being no user in the second area, determining that the display frame rate of the first display device is higher than the display frame rate of the second display device; or
in response to there being a user in the first area and a user in the second area, determining that the display frame rate of the first display device is higher than the display frame rate of the second display device, wherein the first area is a driver area of the cabin, and the second area comprises one or more areas other than the driver area.

10. The method according to claim 8 or 9, wherein the determining that the display frame rate of the first display device is different from the display frame rate of the second display device comprises:
in response to a user touchscreen operation on the first display device within preset time and no user touchscreen operation on the second display device within the preset time, determining that the display frame rate of the first display device is higher than the display frame rate of the second display device; or
in response to no user touchscreen operation on the first display device within preset time and a user touchscreen operation on the second display device within the preset time, determining that the display frame rate of the first display device is lower than the display frame rate of the second display device.

11. The method according to any one of claims 8 to 10, wherein the determining that the display frame rate of the first display device is different from the display frame rate of the second display device comprises:
in response to a priority of a first application to which an interface to be displayed by the first display device belongs being higher than a priority of a second application to which an interface to be displayed by the second display device belongs, determining that the display frame rate of the first display device is higher than the display frame rate of the second display device; or
in response to a priority of a first application to which an interface to be displayed by the first display device belongs being lower than a priority of a second application to which an interface to be displayed by the second display device belongs, determining that the display frame rate of the first display device is lower than the display frame rate of the second display device.

12. The method according to any one of claims 1 to 11, wherein the determining the display frame rate of the display device comprises:
determining the display frame rate based on resource occupation information, wherein
the resource occupation information indicates a used resource capacity and/or an available resource capacity in a remaining resource of a computing unit, and the computing unit is associated with the display device.

13. The method according to claim 12, wherein the display device comprises a third display device, the third display device is configured to perform displaying at least one of entertainment information and navigation information, and the determining the display frame rate comprises:
when the means of delivery is in the traveling state and the resource occupation information indicates that the used resource capacity is greater than or equal to a preset capacity threshold, determining that the display frame rate is a first frame rate; and when the means of delivery is in the traveling state and the resource occupation information indicates that the used resource capacity is less than the preset capacity threshold, determining that the display frame rate is a second frame rate, wherein the first frame rate is higher than the second frame rate.

14. The method according to claim 13, wherein the third display device comprises one or more display devices other than an instrument screen.

15. The method according to any one of claims 1 to 14, wherein the determining the display frame rate of the display device comprises:
when the means of delivery is in the traveling state, and single-frame processing duration in first preset duration is greater than or equal to preset processing duration, determining to decrease the display frame rate of the display device.

16. A control apparatus, comprising a determining unit and a processing unit, wherein
the determining unit is configured to: determine a display frame rate of a display device based on at least one of an operating state of a means of delivery, a location of a user in a cabin of the means of delivery, a touchscreen operation on the display device of the means of delivery, and a type of an application to which an interface to be displayed by the display device belongs; and
the processing unit is configured to control the display device to perform displaying at the display frame rate.

17. The apparatus according to claim 16, wherein the apparatus further comprises an adjustment unit, wherein the adjustment unit is configured to:
adjust the display frame rate based on a change of at least one of the operating state, the location of the user in the cabin of the means of delivery, the touchscreen operation on the display device of the means of delivery, and the type of the application to which the interface to be displayed by the display device belongs.

18. The apparatus according to claim 17, wherein the change of the operating state comprises a transition between a traveling state and a parking state, or a change of an autonomous driving level.

19. The apparatus according to claim 17 or 18, wherein the display device is configured to perform displaying at least one of operating condition information and navigation information of the means of delivery, and the adjustment unit is configured to:
increase the display frame rate in response to a change of the operating state from the parking state to the traveling state;
decrease the display frame rate in response to a change of the operating state from the traveling state to the parking state;
increase the display frame rate in response to a decrease in the autonomous driving level of the means of delivery; or
decrease the display frame rate in response to an increase in the autonomous driving level of the means of delivery.

20. The apparatus according to any one of claims 17 to 19, wherein the display device is configured to display entertainment information, and the adjustment unit is configured to:
decrease the display frame rate in response to the change of the operating state from the parking state to the traveling state;
increase the display frame rate in response to the change of the operating state from the traveling state to the parking state;
decrease the display frame rate in response to the decrease in the autonomous driving level of the means of delivery; or
increase the display frame rate in response to the increase in the autonomous driving level of the means of delivery.

21. The apparatus according to any one of claims 17 to 20, wherein the adjustment unit is configured to:
increase the display frame rate in response to the user arriving at a location that is in the cabin and that corresponds to the display device; or decrease the display frame rate in response to the user leaving a location that is in the cabin and that corresponds to the display device.

22. The apparatus according to any one of claims 17 to 21, wherein the adjustment unit is configured to:
decrease the display frame rate in response to no touchscreen operation occurring within predetermined time after the touchscreen operation; or
increase the display frame rate in response to the touchscreen operation, wherein no touchscreen operation occurs within predetermined time before the touchscreen operation.

23. The apparatus according to any one of claims 16 to 22, wherein the display device comprises a first display device and a second display device, the first display device corresponds to a first area in the cabin, and the second display device corresponds to a second area in the cabin; and the determining unit is configured to:
determine that a display frame rate of the first display device is different from a display frame rate of the second display device.

24. The apparatus according to claim 23, wherein the determining unit is configured to:
in response to there being no user in the first area and there being a user in the second area, determine that the display frame rate of the first display device is lower than the display frame rate of the second display device;
in response to there being a user in the first area and there being no user in the second area, determine that the display frame rate of the first display device is higher than the display frame rate of the second display device; or
in response to there being a user in the first area and a user in the second area, determine that the display frame rate of the first display device is higher than the display frame rate of the second display device, wherein the first area is a driver area of the cabin, and the second area comprises one or more areas other than the driver area.

25. The apparatus according to claim 23 or 24, wherein the determining unit is configured to:
in response to a user touchscreen operation on the first display device within preset time and no user touchscreen operation on the second display device within the preset time, determine that the display frame rate of the first display device is higher than the display frame rate of the second display device; or
in response to no user touchscreen operation on the first display device within preset time and a user touchscreen operation on the second display device within the preset time, determine that the display frame rate of the first display device is lower than the display frame rate of the second display device.

26. The apparatus according to any one of claims 23 to 25, wherein the determining unit is configured to:
in response to a priority of a first application to which an interface to be displayed by the first display device belongs being higher than a priority of a second application to which an interface to be displayed by the second display device belongs, determine that the display frame rate of the first display device is higher than the display frame rate of the second display device; or
in response to a priority of a first application to which an interface to be displayed by the first display device belongs being lower than a priority of a second application to which an interface to be displayed by the second display device belongs, determine that the display frame rate of the first display device is lower than the display frame rate of the second display device.

27. The apparatus according to any one of claims 16 to 26, wherein the determining unit is configured to:
determine the display frame rate based on resource occupation information, wherein
the resource occupation information indicates a used resource capacity and/or an available resource capacity in a remaining resource of a computing unit, and the computing unit is associated with the display device.

28. The apparatus according to claim 27, wherein the display device comprises a third display device, the third display device is configured to perform displaying at least one of entertainment information and navigation information, and the determining unit is configured to:
when the means of delivery is in the traveling state and the resource occupation information indicates that the used resource capacity is greater than or equal to a preset capacity threshold, determine that the display frame rate is a first frame rate; and
when the means of delivery is in the traveling state and the resource occupation information indicates that the used resource capacity is less than the preset capacity threshold, determine that the display frame rate is a second frame rate, wherein the first frame rate is higher than the second frame rate.

29. The apparatus according to claim 28, wherein the third display device comprises one or more display devices other than an instrument screen.

30. The apparatus according to any one of claims 16 to 29, wherein the determining unit is configured to:
when the means of delivery is in the traveling state, and single-frame processing duration in first preset duration is greater than or equal to preset processing duration, determine to decrease the display frame rate of the display device.

31. A control apparatus, comprising:
a memory, configured to store a computer program; and
a processor, configured to execute the computer program stored in the memory, to enable the apparatus to perform the method according to any one of claims 1 to 15.

32. A means of delivery, comprising the apparatus according to any one of claims 16 to 31 and the display device.

33. A computer-readable storage medium, wherein the computer-readable storage medium stores instructions; and when the instructions are executed by a processor, the processor is enabled to implement the method according to any one of claims 1 to 15.

34. A chip, wherein the chip comprises a circuit, and the circuit is configured to perform the method according to any one of claims 1 to 15.
